# EUROPEAN PATENT APPLICATION

(11) **EP 2 824 540 A1**
(43) Date of publication of application: **14.01.2015**
(21) Application number: 14000500.0
(22) Date of filing: 12.02.2014
(51) Int. Cl.: G06F 3/01

(54) **Mobile terminal and control method thereof**

(30) Priority: 09.07.2013 KR 20130080499
(71) Applicant: LG Electronics, Inc., Seoul 150-721 (KR)
(72) Inventor: Lim, Gukchan, 137-893 Seoul (KR); Seo, Hyewon, 137-893 Seoul (KR); Kim, Seonhui, 137-893 Seoul (KR); Yoon, Yeomyung, 137-893 Seoul (KR); Eum, Hyejin, 137-893 Seoul (KR); Park, Hanl, 137-893 Seoul (KR)
(74) Representative: Beyer, Andreas

(57) **Abstract**

A mobile terminal including an output unit configured to output information; a receiving device configured to receive information from an external device; a controller configured to receive body condition information about a physical condition of a user while specific information is being received by the receiving device or output by the output unit, analyze the body condition information and estimate an emotional state of the user based on the body condition information, generate tag information indicating the estimated emotional state of the user, store the generated tag information with data corresponding the specific information, and output the generated tag information and the data corresponding to the specific information.

## Description

### BACKGROUND OF THE INVENTION

### Field of the Invention

The present invention relates to a mobile terminal that outputs content based on a user's feelings.

### Description of the Related Art

In general, terminals may be divided into a mobile terminal and stationary terminal according. In addition, mobile terminals may be divided into a handheld terminal and a vehicle mounted terminal.

As such functions become more diversified, the mobile terminal can support more complicated functions such as capturing images or video, reproducing music or video files, playing games, receiving broadcast signals, and the like. Thus, the mobile terminal 100 can be embodied in the form of a multimedia player or device.

Recently, an artificial intelligence system that recognizes a user's voice and provides information according to a user condition has been introduced to mobile terminals. However, since appropriate information is provided based on a command consciously input by a user, unless the user inputs a control command, information cannot be provided. Thus, the user may miss required information unconsciously or may forget provided information, and he or she cannot store it in the mobile terminal without a control command.

### SUMMARY OF THE INVENTION

As aspect of the present invention provides a mobile terminal providing content according to a change in user's feelings without a control command.

To achieve these and other advantages and in accordance with the purpose of the present invention, as embodied and broadly described herein, the present invention provides in one aspect a mobile terminal including: an input unit configured to receive information from the outside; an output unit configured to output information to a user; a reception unit configured to receive a user's body condition signal while specific information is being received from the outside or from the output unit; an analyzing unit configured to analyze the body condition information to determine user's feelings; and a controller configured to generate feeling data regarding the user's feelings and tag the feeling data to the specific information, and control the output unit to output content related to the specific information and the feeling data.

In an example related to the present invention, the body condition signal may correspond to information regarding a user's heartbeat, and the analyzing unit may analyze patterns included in the heartbeat information to determine the user's feelings.

In an example related to the present invention, the mobile terminal 100 can further include: a terminal body formed to be fixed to the user's body; and a measurement device installed in the terminal body, formed to have at least a portion which come into contact with the user's skin, and configured to transmit the heartbeat information to the reception unit.

In an example related to the present invention, the mobile terminal 100 can further include: an input unit configured to receive a user's control command, wherein the controller may analyze the user's control command input to the input unit and generate the feeling data based on an attribute of the analyzed control command and the heartbeat information.

In an example related to the present invention, the controller may control the reception unit to receive the body condition information when the control command for controlling the output unit outputting the specific information is applied.

In an example related to the present invention, the relevant content may include an attribute the same as at least one of attributes of the specific information.

In an example related to the present invention, the mobile terminal 100 can further include: a memory, wherein when the feeling data is matched to pre-set feeling data, the controller may control the memory to store the specific information.

In an example related to the present invention, the mobile terminal 100 can further include: a camera configured to image an external environment, wherein when the feeling data is matched to pre-set feeling data, the controller may control the camera to image the specific information.

In an example related to the present invention, the mobile terminal 100 can further include: a memory configured to store the specific information to which the feeling data is tagged, wherein when a plurality of information items to which the plurality of feeling data items are tagged, respectively, are stored in the memory, the controller may control the memory to classify the plurality of information items and store the same according to the plurality of feeling data items.

In an example related to the present invention, the output unit may include: a display unit configured to output visual data, wherein after the feeling data is tagged to the specific information, when the specific information is provided again to the user, the controller may control the display unit to output again the relevant content, and the relevant content may correspond to the visualized feeling data.

In an example related to the present invention, based on a touch input applied to a region of the display unit outputting the visualized feeling data, the controller may control the output unit to output additional content to which the feeling data is tagged.

In an example related to the present invention, the mobile terminal 100 can further include: an input unit activated to receive an external signal provided from the outside.

In an example related to the present invention, the controller may search additional content related to at least a portion included in the specific information based on the external signal input through the input unit, and control the output unit to output the additional content.

In an example related to the present invention, the controller may control the output unit configured to visualize the tagged feeling data and output the visualized feeling data together with the specific information.

In an example related to the present invention, the mobile terminal 100 can further include: a camera configured to image a change in the user's body while the specific information is being provided; and a microphone configured to sense a user's voice, wherein the controller may control the output unit to output visual data obtained by visualizing user's feelings through the body condition signal, the imaged body change, and the voice, together with the specific information.

In an example related to the present invention, the visual data may correspond to text converted from the voice or text describing the body change.

In an example related to the present invention, the controller may control a wireless communication unit configured to transmit the text and the specific information to an external terminal or a Web.

To achieve these and other advantages and in accordance with the purpose of the present invention, as embodied and broadly described herein, the present invention provides in another aspect a control method of a mobile terminal, including: receiving information regarding a user's body condition while a user is being provided with specific information from the outside or through an output unit; generating user's feeling data based on the body condition information; tagging the feeling data to the specific information; and outputting relevant content related to at least one of the feeling data and the specific information.

In an example related to the present invention, the method further comprising: classifying the specific information based on the feeling data and storing the same.

In an example related to the present invention, the outputting of relevant content related to at least one of the feeling data and the specific information may include: comparing the feeling data generated after the feeling data is tagged to the specific information with pre-set reference data; and when the feeing data is matched to the reference data, searching the relevant content.

According to embodiments of the present invention, specific information provided based on sensed user's feelings is stored and the same category is stored based on feeling data.

Thus, a user may reminisce about his or her feelings with respect to the specific information, and various types of specific information based on feelings may be conveniently provided.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
- FIG. 1: is a block diagram of a mobile terminal according to an embodiment of the present invention.
- FIGS. 2A and 2B: are conceptual views of a communication system in which the mobile terminal according to an embodiment of the present invention is operable.
- FIG. 3A: is a front perspective view of the mobile terminal related to the present invention.
- FIG. 3B: is a rear perspective view of the mobile terminal illustrated in FIG. 3A.
- FIG. 4: is a flow chart illustrating a control method of a mobile terminal according to an embodiment of the present invention.
- FIG. 5A: is a conceptual view illustrating the control method of FIG. 4 according to an embodiment of the present invention.
- FIGS. 5B and 5C: are conceptual views illustrating the control method of FIG. 4.
- FIG. 5D: is a conceptual view illustrating a measurement device.
- FIG. 5E: includes graphs showing body condition information received from the measurement device 900.
- FIGS. 6A through 6C: are conceptual views illustrating control methods of a mobile terminal according to various embodiments of the present invention.
- FIGS. 7A through 7D: are conceptual views illustrating control methods to provide user's feeling data or specific information to which feeling data is tagged and additional content.
- FIGS. 8A and 8B: are conceptual views illustrating control methods to output user's feeling data as content.
- FIGS. 9A through 9C: are conceptual views illustrating methods for outputting content based on specific information provided from various sources.
- FIGS. 10A through 10C: are conceptual views illustrating control methods to provide content including information regarding an external terminal to a user by using user's feeling data and feeling data of the external terminal.

### DETAILED DESCRIPTION OF THE INVENTION

The embodiments of the present invention will now be described with reference to the accompanying drawings, in which like numbers refer to like elements throughout although the embodiments are different, and a description of the like elements a first embodiment will be used for those of the different embodiment. In the following description, usage of suffixes such as 'module', 'part' or 'unit' used for referring to elements is given merely to facilitate explanation of the present invention, without having any significant meaning by itself. In describing the present invention, if a detailed explanation for a related known function or construction is considered to unnecessarily divert the gist of the present invention, such explanation has been omitted but would be understood by those skilled in the art. The accompanying drawings of the present invention aim to facilitate understanding of the present invention and should not be construed as limited to the accompanying drawings.

Mobile terminals described in the present disclosure may include mobile phones, smart phones, notebook computers, tablet computers, digital broadcast receivers, PDAs (Personal Digital Assistants), PMPs (Portable Multimedia Player), navigation devices, slate PCs, tablet PCs, ultra-books, and the like. However, it would be understood by a person skilled in the art that the configuration according to embodiments of the present invention can be also applicable to the fixed types of terminals such as digital TVs, desk top computers, and the like, except for any elements especially configured for a mobile purpose.

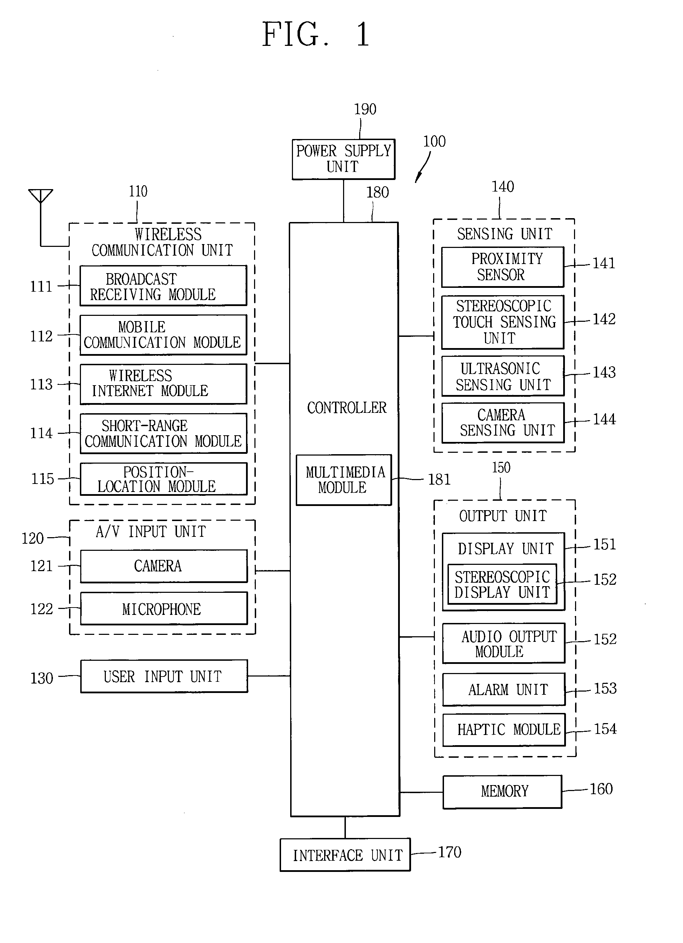

FIG. 1 is a block diagram of a mobile terminal according to an embodiment of the present invention. The mobile terminal 100 may include a wireless communication unit 110, an A/V (Audio/Video) input unit 120, a user input unit 130, a sensing unit 140, an output unit 150, a memory 160, an interface unit 170, a controller 180, and a power supply unit 190, etc. FIG. 1 shows the mobile terminal as having various components, but implementing all of the illustrated components is not a requirement. Greater or fewer components may alternatively be implemented.

The wireless communication unit 110 typically includes one or more modules allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal.

The broadcast associated information may refer to information associated with a broadcast channel, a broadcast program or a broadcast service provider. The broadcast associated information may also be provided via a mobile communication network and, in this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 can be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{®}), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160.

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The wireless Internet module 113 supports wireless Internet access for the mobile terminal. This module may be internally or externally coupled to the terminal. The wireless-Internet access technique implemented may include a WLAN (Wireless LAN) (Wi-Fi), Wibro (Wireless broadband), Wimax (World Interoperability for Microwave Access), HSDPA (High Speed Downlink Packet Access), or the like.

The short-range communication module 114 is a module for supporting short range communications. Some examples of short-range communication technology include Bluetooth™, Radio Frequency IDentification (RFID), Infrared Data Association (IrDA), Ultra-WideBand (UWB), ZigBee™, and the like.

The location information module 115 is a module for checking or acquiring a location (or position) of the mobile terminal. A typical example of the location information module is a GPS (Global Positioning System) or a WiFi (Wireless Fidelity) module.

With reference to FIG. 1, the A/V input unit 120 is configured to receive an audio or video signal. The A/V input unit 120 may include a camera 121 and a microphone 122. The camera 121 processes image data of still pictures or video obtained by an image capture device in a video capturing mode or an image capturing mode. The processed image frames may be displayed on a display unit 151.

The image frames processed by the camera 121 may be stored in the memory 160 (or other storage medium) or transmitted via the wireless communication unit 110. Two or more cameras 121 may be provided according to the configuration of the mobile terminal.

The microphone 122 can receive sounds (audible data) in a phone call mode, a recording mode, a voice recognition mode, and the like, and can process such sounds into audio data. The processed audio (voice) data is converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 can generate input data from commands entered by a user to control various operations of the mobile terminal. The user input unit 130 may include a keypad, a dome switch, a touch pad, a jog wheel, a jog switch, and the like.

The sensing unit 140 detects a current status (or state) of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The output unit 150 is configured to provide outputs in a visual, audible, and/or tactile manner (e.g., audio signal, video signal, alarm signal, vibration signal, etc.). The output unit 150 may include the display unit 151, an audio output module 153, an alarm unit 154, a haptic module 155, and the like.

The display unit 151 displays information processed in the mobile terminal 100. For example, when the mobile terminal 100 is in a phone call mode, the display unit 151 can display a User Interface (UI) or a Graphic User Interface (GUI) associated with a call or other communication (such as text messaging, multimedia file downloading, etc.). When the mobile terminal 100 is in a video call mode or image capturing mode, the display unit 151 can display a captured image and/or received image, a UI or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of the displays may be configured to be transparent or light-transmissive to allow viewing of the exterior, which may be called transparent displays. A typical transparent display may be, for example, a TOLED (Transparent Organic Light Emitting Diode) display, or the like. Through such configuration, the user can view an object positioned at the rear side of the terminal body through the region occupied by the display unit 151 of the terminal body.

The mobile terminal 100 may include two or more display units according to its particular desired embodiment. For example, a plurality of display units may be separately or integrally disposed on one surface of the mobile terminal, or may be separately disposed on mutually different surfaces.

Also, the display unit 151 may be configured as a stereoscopic display unit 152 displaying a stereoscopic image. Here, the stereoscopic image may be a three-dimensional (3D) stereoscopic image, and the 3D stereoscopic image is an image refers to an image making a viewer feel that a gradual depth and reality of an object on a monitor or a screen is the same as a reality space. A 3D stereoscopic image is implemented by using binocular disparity. Binocular disparity refers to disparity made by the positions of two eyes. When two eyes view different 2D images, the images are transferred to the brain through the retina and combined in the brain to provide the perception of depth and reality sense.

The stereoscopic display unit 152 may employ a stereoscopic display scheme such as stereoscopic scheme (a glass scheme), an auto-stereoscopic scheme (glassless scheme), a projection scheme (holographic scheme), or the like. Stereoscopic schemes commonly used for home television receivers, or the like, include Wheatstone stereoscopic scheme, or the like.

The auto-stereoscopic scheme includes, for example, a parallax barrier scheme, a lenticular scheme, an integral imaging scheme, or the like. The projection scheme includes a reflective holographic scheme, a transmissive holographic scheme, or the like.

In general, a 3D stereoscopic image includes a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Also, as for a 3D thumbnail image, a left image thumbnail and a right image thumbnail are generated from a left image and a right image of the original image frame, respectively, and then combined to generate a single 3D thumbnail image. In general, thumbnail refers to a reduced image or a reduced still image. The generated left image thumbnail and the right image thumbnail are displayed with a horizontal distance difference therebetween by a depth corresponding to the disparity between the left image and the right image on the screen, providing a stereoscopic space sense.

A left image and a right image required for implementing a 3D stereoscopic image is displayed on the stereoscopic display unit 152 by a stereoscopic processing unit 152a. The stereoscopic processing unit may receive the 3D image and extract the left image and the right image, or may receive the 2D image and change it into a left image and a right image.

Meanwhile, when the display unit 151 and a sensor (referred to as a 'touch sensor', hereinafter) for detecting a touch operation are overlaid in a layered manner to form a touch screen, the display unit 151 may function as both an input device and an output device. The touch sensor may have a form of a touch film, a touch sheet, a touch pad, and the like.

The touch sensor may be configured to convert pressure applied to a particular portion of the display unit 151 or a change in the capacitance or the like generated at a particular portion of the display unit 151 into an electrical input signal. The touch sensor may be configured to detect the pressure when a touch is applied, as well as the touched position and area.

When there is a touch input with respect to the touch sensor, a corresponding signal (signals) are transmitted to a touch controller. The touch controller processes the signals and transmits corresponding data to the controller 180. Accordingly, the controller 180 can recognize which portion of the display unit 151 has been touched.

With reference to FIG. 1, a proximity sensor 141 may be disposed within or near the touch screen. The proximity sensor 141 is a sensor for detecting the presence or absence of an object relative to a certain detection surface or an object that exists nearby by using the force of electromagnetism or infrared rays without a physical contact. Thus, the proximity sensor 141 has a considerably longer life span compared with a contact type sensor, and it can be utilized for various purposes.

Examples of the proximity sensor 141 may include a transmission type photoelectric sensor, a direct reflection type photoelectric sensor, a mirror-reflection type photoelectric sensor, an RF oscillation type proximity sensor, a capacitance type proximity sensor, a magnetic proximity sensor, an infrared proximity sensor, and the like. In case where the touch screen is the capacitance type, proximity of the pointer is detected by a change in electric field according to the proximity of the pointer. In this case, the touch screen (touch sensor) may be classified as a proximity sensor.

In the following description, for the sake of brevity, recognition of the pointer positioned to be close to the touch screen will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen.

By employing the proximity sensor 141, a proximity touch and a proximity touch pattern (e.g., a proximity touch distance, a proximity touch speed, a proximity touch time, a proximity touch position, a proximity touch movement state, or the like) can be detected, and information corresponding to the detected proximity touch operation and the proximity touch pattern can be outputted to the touch screen.

When a touch sensor is overlaid on the stereoscopic display unit 152 in a layered manner, or when the stereoscopic display unit and a 3D sensor sensing a touch operation are combined, the stereoscopic display unit 152 may also be used as a 3D input device.

As examples of the 3D sensor, the sensing unit 140 may include the proximity sensor 141, a stereoscopic touch sensing unit 142, an ultrasonic sensing unit 143, and a camera sensing unit 144. The proximity sensor 141 detects the distance between a sensing object (e.g., the user's finger or a stylus) applying a touch by using the force of electromagnetism or infrared rays without a mechanical contact and a detect surface. By using the distance, the terminal recognizes which portion of a stereoscopic image has been touched.

In particular, when the touch screen is an electrostatic touch screen, the degree of proximity of the sensing object is detected based on a change of an electric field according to proximity of the sensing object, and a touch to the 3D image is recognized by using the degree of proximity.

The stereoscopic touch sensing unit 142 is configured to detect the strength or duration of a touch applied to the touch screen. For example, the stereoscopic touch sensing unit 142 senses pressure applying a touch, and the applied pressure is strong, the stereoscopic touch sensing unit 142 recognizes the touch as a touch with respect to an object positioned to be farther from the touch screen toward the interior of the terminal.

The ultrasonic sensing unit 143 is configured to recognize position information of the sensing object by using ultrasonic waves.

The ultrasonic sensing unit 143 may include, for example, an optical sensor and a plurality of ultrasonic sensors. The optical sensor is configured to sense light, and the ultrasonic sensors may be configured to sense ultrasonic waves. Since light is very faster than ultrasonic waves, light reaches the optical sensor very earlier than ultrasonic waves reach the ultrasonic sensors. Thus, based on light as a reference signal, a position of a wave generation source may be calculated by using a time difference between a time at which light reaches the optical sensor and a time at which ultrasonic waves reach the ultrasonic sensors.

The camera sensing unit 144 includes at least one of a camera, a photo sensor, and a laser sensor. For example, the camera and the laser sensor may be combined to detect a touch of the sensing object with respect to a 3D stereoscopic image. When distance information detected by a laser sensor is added to a 2D image captured by the camera, 3D information can be obtained.

In another example, a photo sensor may be laminated on the display device. The photo sensor is configured to scan a movement of the sensing object in proximity to the touch screen. In detail, the photo sensor includes photo diodes and transistors at rows and columns to scan content mounted on the photo sensor by using an electrical signal changing according to the quantity of applied light. Namely, the photo sensor calculates the coordinates of the sensing object according to variation of light to thus obtain position information of the sensing object.

The audio output module 153 can convert and output sound audio data received from the wireless communication unit 110 or stored in the memory 160 in a call signal reception mode, a call mode, a record mode, a voice recognition mode, a broadcast reception mode, and the like. Also, the audio output module 153 may provide audible outputs related to a particular function performed by the mobile terminal 100 (e.g., a call signal reception sound, a message reception sound, etc.). The audio output module 153 may include a speaker, a buzzer, or other sound generating device.

The alarm unit 154 outputs a signal for informing about an occurrence of an event of the mobile terminal 100. Events generated in the mobile terminal 100 can include call signal reception, message reception, key signal inputs, a touch input etc. In addition to video or audio signals, the alarm unit 154 may output signals in a different manner, for example, to inform about an occurrence of an event. The video or audio signals may be also outputted via the audio output module 153, so the display unit 151 and the audio output module 153 may be classified as parts of the alarm unit 154.

A haptic module 155 generates various tactile effects the user may feel. A typical example of the tactile effects generated by the haptic module 155 is vibration. The strength and pattern of the haptic module 155 can be controlled. For example, different vibrations may be combined to be outputted or sequentially outputted.

Besides vibration, the haptic module 155 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 155 may be implemented to allow the user to feel a tactile effect through a muscle sensation such as fingers or arm of the user, as well as transferring the tactile effect through a direct contact. Two or more haptic modules 155 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 can include a multimedia module 181 for reproducing multimedia data. The multimedia module 181 may be configured within the controller 180 or may be configured to be separated from the controller 180.

The controller 180 can perform a pattern recognition processing to recognize a handwriting input or a picture drawing input performed on the touch screen as characters or images, respectively.

Also, when a state of the mobile terminal satisfies pre-set conditions, the controller 180 can execute a locked state for limiting an input of a control command of the user. Also, in the locked state, the controller 180 can control a locked screen displayed in the locked state based on a touch input sensed through the display unit 151.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For a hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For a software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

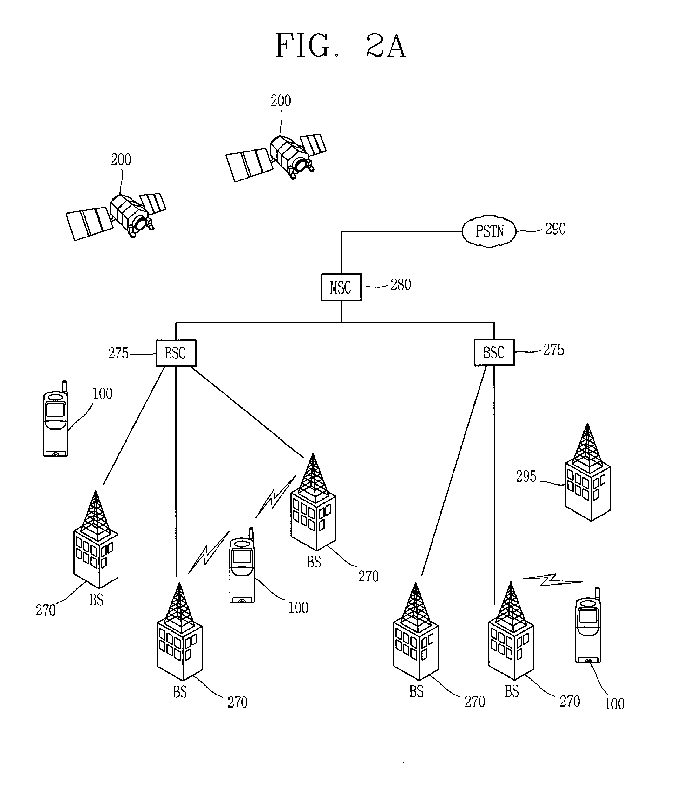

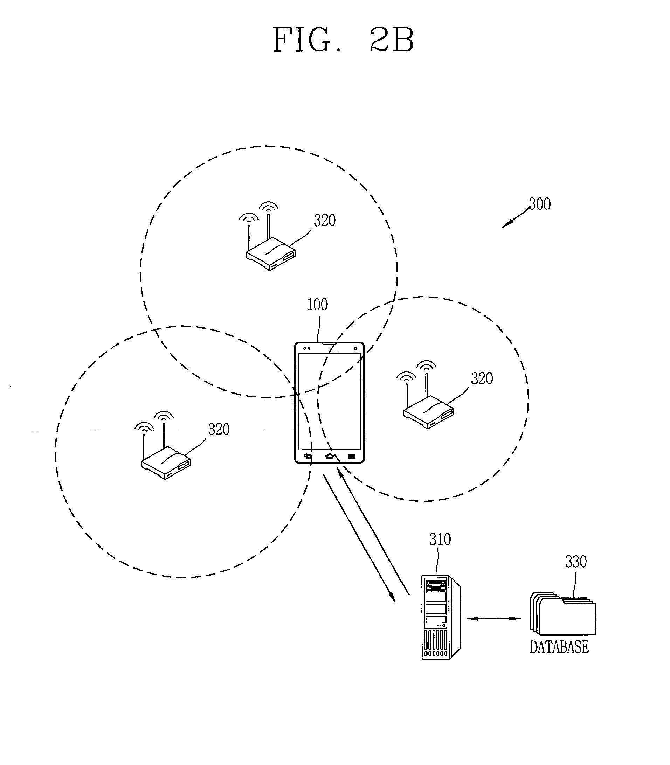

Hereinafter, a communication system implementable through the mobile terminal 100 according to an embodiment of the present invention will be described. FIGS. 2A and 2B are conceptual views of communication systems in which the mobile terminal 100 according to an embodiment of the present invention is operable.

First, referring to FIG. 2A, a communication system may use different air interfaces and/or physical layers. For example, air interfaces utilized by the communication systems include example, frequency division multiple access (FDMA), time division multiple access (TDMA), code division multiple access (CDMA), and universal mobile telecommunications system (UMTS) (in particular, long term evolution (LTE)), global system for mobile communications (GSM), and the like. As a non-limiting example, the description hereafter relates to a CDMA communication system, but such teachings apply equally to other types of systems.

Hereinafter, for the description purpose, CDMA will be described, but the present invention is applicable to any communication system including a CDMA wireless communication system.

Referring to FIG. 2A, a CDMA wireless communication system may include a plurality of mobile terminals 100, a plurality of base stations (BSs) 270, base station controllers (BSCs) 275, and a mobile switching center (MSC) 280. The MSC 280 is configured to interface with a public switch telephone network (PSTN) 290. The MSC 280 is also configured to interface with the BSCs 275, which may be coupled to the base stations 270 via backhaul lines. The backhaul lines may be configured in accordance with any of several known interfaces including, for example, E1/T1, ATM, IP, PPP, Frame Relay, HDSL, ADSL, or xDSL. It is to be understood that the system as shown in FIG. 2 may include a plurality of BSCs 275.

Each BS 270 may serve one or more sectors (or regions), each sector covered by an omni-directional antenna or an antenna pointed in a particular direction radially away from the BS 270. Alternatively, each sector may be covered by two or more antennas for diversity reception. Each BS 270 may be configured to support a plurality of frequency assignments, and each frequency assignment has a particular spectrum (e.g., 1.25 MHz, 5 MHz, etc.).

The intersection of a sector and frequency assignment may be referred to as a CDMA channel. The BS 270 may also be referred to as base station transceiver subsystems (BTSs) or other equivalent terms. In such case, the term "base station" may be used to collectively refer to a single BSC 275 and at least one BS 270. The base station may also be referred to as a "cell site". Alternatively, individual sectors of a particular BS 270 may be referred to as a plurality of cell sites.

As shown in FIG. 2A, a broadcasting transmitter (BT) 295 transmits a broadcast signal to the mobile terminals 100 operating within the system. The broadcast receiving module 111 as shown in FIG. 1 is provided at the terminal 100 to receive broadcast signals transmitted by the BT 295.

Also, in FIG. 2A, several global positioning systems (GPS) satellites 200 are shown. The satellites 200 help locate at least one of a plurality of terminals 100. In FIG. 2, several satellites 200 are depicted, but useful positioning information may be obtained with any number of satellites. The GPS module 115 as shown in FIG. 1 is typically configured to cooperate with the satellites 300 to obtain desired positioning information. Instead of or in addition to GPS tracking techniques, other technologies that may track the location of the mobile terminals may be used. In addition, at least one of the GPS satellites 300 may selectively or additionally handle satellite DMB transmissions.

As one typical operation of the wireless communication system, the BSs 270 receive reverse-link signals from various mobile terminals 100. The mobile terminals 100 typically engaging in calls, messaging, and other types of communications. Each reverse-link signal received by a particular base station 270 is processed within the particular BS 270. The resulting data is forwarded to an associated BSC 275. The BSC provides call resource allocation and mobility management functionality including the coordination of soft handoff procedures between BSs 270.

The BSCs 275 also route the received data to the MSC 280, which provides additional routing services for interfacing with the PSTN 290. Similarly, the PSTN 290 interfaces with the MSC 280, the MSC interfaces with the BSCs 275, and the BSCs 275 in turn control the BSs 270 to transmit forward-link signals to the mobile terminals 100.

Next, a method of acquiring the location information of a mobile terminal using a Wi-Fi (Wireless Fidelity) positioning system (WPS) 300 will be described with reference to FIG. 2B. The Wi-Fi positioning system (WPS) 300 refers to a location determination technology based on a wireless local area network (WLAN) using Wi-Fi as a technology for tracking the location of the mobile terminal 100 using a Wi-Fi module provided in the mobile terminal 100 and a wireless access point 320 for transmitting and receiving to and from the Wi-Fi module.

The Wi-Fi positioning system 300 may include a Wi-Fi location determination server 310, a mobile terminal 100, a wireless access point (AP) 320 connected to the mobile terminal 100, and a database 330 stored with any wireless AP information.

The Wi-Fi location determination server 310 extracts the information of the wireless AP 320 connected to the mobile terminal 100 based on a location information request message (or signal) of the mobile terminal 100. The information of the wireless AP 320 may be transmitted to the Wi-Fi location determination server 310 through the mobile terminal 100 or transmitted to the Wi-Fi location determination server 310 from the wireless AP 320.

The information of the wireless AP extracted based on the location information request message of the mobile terminal 100 may be at least one of MAC address, SSID, RSSI, channel information, privacy, network type, signal strength and noise strength.

The Wi-Fi location determination server 310 receives the information of the wireless AP 320 connected to the mobile terminal 100 as described above, and compares the received wireless AP 320 information with information contained in the preestablished database 330 to extract (or analyze) the location information of the mobile terminal 100.

On the other hand, referring to FIG. 2B, as an example, the wireless AP connected to the mobile terminal 100 is illustrated as a first, a second, and a third wireless AP 320. However, the number of wireless APs connected to the mobile terminal 100 may be changed in various ways according to a wireless communication environment in which the mobile terminal 100 is located. When the mobile terminal 100 is connected to at least one of wireless APs, the Wi-Fi positioning system 300 can track the location of the mobile terminal 100.

Next, considering the database 330 stored with any wireless AP information in more detail, various information of any wireless APs disposed at different locations may be stored in the database 330.

The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

In this manner, any wireless AP information and location information corresponding to the any wireless AP are stored together in the database 330, and thus the Wi-Fi location determination server 310 may retrieve wireless AP information corresponding to the information of the wireless AP 320 connected to the mobile terminal 100 from the database 330 to extract the location information matched to the searched wireless AP, thereby extracting the location information of the mobile terminal 100.

Furthermore, the extracted location information of the mobile terminal 100 may be transmitted to the mobile terminal 100 through the Wi-Fi location determination server 310, thereby acquiring the location information of the mobile terminal 100.

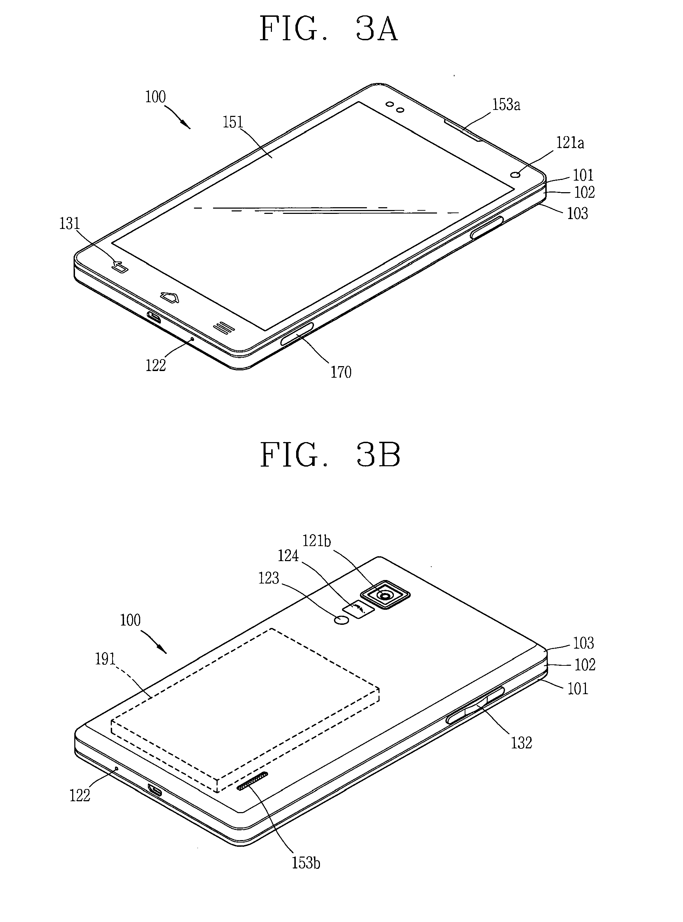

Next, FIG. 3A is a front perspective view illustrating an example of the mobile terminal 100 associated with the present disclosure. The mobile terminal 100 disclosed herein is provided with a bar-type terminal body. However, the present invention is not limited to this, but also may be applicable to various structures such as watch type, clip type, glasses type or folder type, flip type, swing type, swivel type, or the like, in which two and more bodies are combined with each other in a relatively movable manner.

The terminal body includes a case (casing, housing, cover, etc.) forming the appearance of the terminal. In this embodiment, the case may be divided into a front case 101 and a rear case 102. Various electronic components are incorporated into a space formed between the front case 101 and the rear case 102. At least one middle case may be additionally disposed between the front case 101 and the rear case 102, and a battery cover 103 for covering the battery 191 may be detachably configured at the rear case 102.

The cases may be formed by injection-molding a synthetic resin or may be also formed of a metal, for example, stainless steel (STS), titanium (Ti), or the like.

A display unit 151, a first audio output module 153a, a first camera 121a, a first manipulating unit 131 and the like may be disposed on a front surface of the terminal body, and a microphone 122, an interface unit 170, a second manipulating unit 132 and the like may be provided on a lateral surface thereof.

The display unit 151 may be configured to display (output) information being processed in the mobile terminal 100. The display unit 151 may include at least one of a liquid crystal display (LCD), a thin film transistor-liquid crystal display (TFT-LCD), an organic light emitting diode (OLED) display, a flexible display, a 3-dimensional (3D) display, and an e-ink display.

The display unit 151 may include a touch sensing mechanism to receive a control command by a touch method. When a touch is made to any one place on the display unit 151, the touch sensing mechanism may be configured to sense this touch and enter the content corresponding to the touched place. The content entered by a touch method may be a text or numerical value, or a menu item capable of indication or designation in various modes.

The touch sensing mechanism may be formed with transparency to allow visual information displayed on the display unit 151 to be seen, and may include a structure for enhancing the visibility of a touch screen at bright places. Referring to FIG. 3A, the display unit 151 occupies a most portion of the front surface of the front case 101.

The first audio output module 153a and the first camera 121a are disposed in a region adjacent to one of both ends of the display unit 151, and the first manipulation input unit 131 and the microphone 122 are disposed in a region adjacent to the other end thereof. The second manipulation unit 132 (refer to FIG. 3B), the interface 170, and the like, may be disposed on a lateral surface of the terminal body.

The first audio output module 153a may be implemented in the form of a receiver for transferring voice sounds to the user's ear or a loud speaker for outputting various alarm sounds or multimedia reproduction sounds.

It may be configured such that the sounds generated from the first audio output module 153a are released along an assembly gap between the structural bodies. In this case, a hole independently formed to output audio sounds may not be seen or hidden in terms of appearance, thereby further simplifying the appearance of the mobile terminal 100. However, the present invention may not be limited to this, but a hole for releasing the sounds may be formed on the window.

The first camera 121a processes video frames such as still or moving images obtained by the image sensor in a video call mode or capture mode. The processed video frames may be displayed on the display unit 151.

The user input unit 130 is manipulated to receive a command for controlling the operation of the mobile terminal 100. The user input unit 130 may include a first and a second manipulation unit 131, 132. The first and the second manipulation unit 131, 132 may be commonly referred to as a manipulating portion, and any method may be employed if it is a tactile manner allowing the user to perform manipulation with a tactile feeling such as touch, push, scroll or the like.

The present drawing illustrates the first manipulation unit 131 is a touch key, but the present disclosure is not limited to this. For example, the first manipulation unit 131 may be configured with a mechanical key, or a combination of a touch key and a mechanical key.

The content received by the first and/or second manipulation units 131, 132 may be set in various ways. For example, the first manipulation unit 131 may be used to receive a command such as menu, home key, cancel, search, or the like, and the second manipulation unit 132 may receive a command, such as controlling a volume level being outputted from the first audio output module 153a, or switching into a touch recognition mode of the display unit 151.

The microphone 122 may be formed to receive the user's voice, other sounds, or the like. The microphone 122 may be provided at a plurality of places, and configured to receive stereo sounds.

The interface unit 170 serves as a path allowing the mobile terminal 100 to exchange data with external devices. For example, the interface unit 170 may be at least one of a connection terminal for connecting to an earphone in a wired or wireless manner, a port for near field communication (for example, an Infrared Data Association (IrDA) port, a Bluetooth port, a wireless LAN port, and the like), and a power supply terminal for supplying power to the mobile terminal 100. The interface unit 170 may be implemented in the form of a socket for accommodating an external card such as Subscriber Identification Module (SIM) or User Identity Module (UIM), and a memory card for information storage.

FIG. 3B is a rear perspective view illustrating mobile terminal 100 illustrated in FIG. 3A. Referring to FIG. 3B, a second camera 121b may be additionally mounted at a rear surface of the terminal body, namely, the rear case 102. The second camera 121b has an image capturing direction, which is substantially opposite to the direction of the first camera unit 121a, and may have a different number of pixels from that of the first camera unit 121a.

For example, it is preferable that the first camera 121a has a relatively small number of pixels enough not to cause difficulty when the user captures his or her own face and sends it to the other party during a video call or the like, and the second camera 121b has a relatively large number of pixels since the user often captures a general object that is not sent immediately. The first and the second camera 121a, 121b may be provided in the terminal body in a rotatable and pop-up manner.

A flash 123 and a mirror 124 may be additionally disposed adjacent to the second camera 121b. The flash 123 illuminates light toward an object when capturing the object with the second camera 121b. The mirror 124 allows the user to look at his or her own face, or the like, in a reflected way when capturing himself or herself (in a self-portrait mode) by using the second camera 121b.

A second audio output module 153b may be additionally disposed at a rear surface of the terminal body. The second audio output module 153b together with the first audio output module 153a (refer to FIG. 3A) can implement a stereo function, and may be also used to implement a speaker phone mode during a phone call.

An antenna for receiving broadcast signals may be additionally disposed at a lateral surface of the terminal body in addition to an antenna for making a phone call or the like. The antenna constituting part of the broadcast receiving module 111 may be provided in the terminal body in a retractable manner.

A power supply unit 190 for supplying power to the mobile terminal 100 may be mounted on the terminal body. The power supply unit 190 may be incorporated into the terminal body, or may include a battery 191 configured in a detachable manner on the outside of the terminal body. The drawing illustrates the battery cover 103 is combined with the rear case 102 to cover the battery 191, thereby restricting the battery 191 from being released and protecting the battery 191 from external shocks and foreign substances.

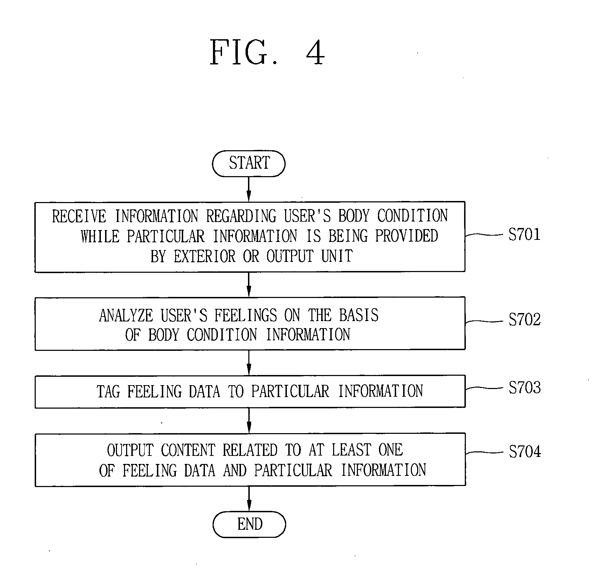

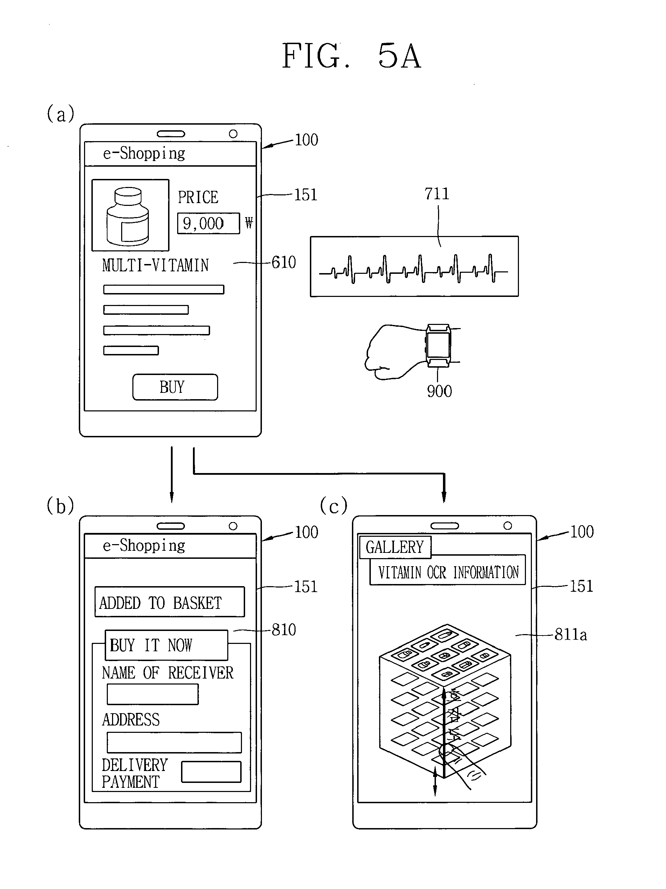

Next, FIG. 4 is a flow chart illustrating a method of controlling a mobile terminal and FIG. 5A is a conceptual view illustrating the control method of FIG. 4 according to an embodiment of the present invention.

Referring to (a) of FIG. 5A, the user receives specific information through the output unit 150 of the mobile terminal 100. For example, the user can receive first specific information 610 output to the display unit of the mobile terminal 100. In addition, the specific information 610 may be audio information output through the speaker 153, visual information output through the display unit, or media information including hearing information and the visual information. However, there is no limitation in content included in the specific information.

Referring to (a) of FIG. 5A, the display unit 151 displays screen information as the first specific information 610 to the user. The controller 180 then receives information about the user's body condition while the user is being provided with the first specific information 610.

The body condition information is generated by a measurement device 900 in contact with the user's body. For example, the measurement device 900 may be a watch fixed to the user's wrist such that at least a region thereof is in contact with the user's skin. However, any type of device may be used as long as it can sense a physical change in the user. For example, the measurement device may be glasses, earrings, a watch, a bracelet, and the like, which may be in contact with a region of the user's face on a continual basis. Also, the measurement device 900 may be installed in a region of the terminal body 100 which comes into contact with the user's hand.

In addition, the body condition information may be generated by a change in heartbeat, a change in an amount of a measured blood flow, and the like, transmitted by the user's skin.

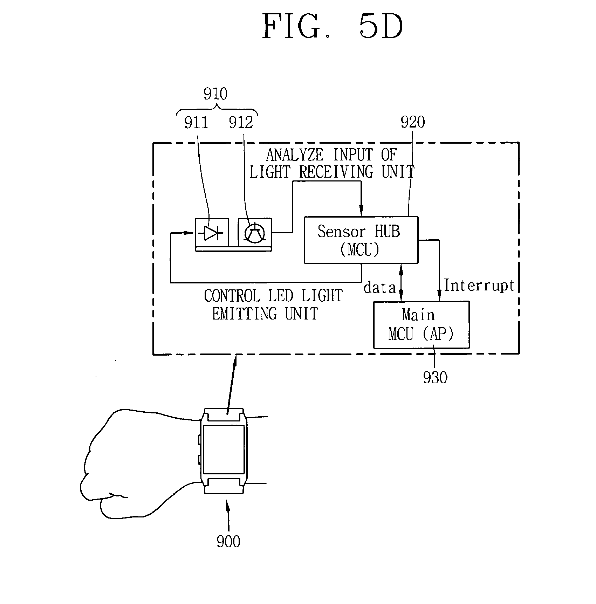

FIG. 5D is a conceptual view illustrating a measurement device 900. Referring to FIG. 5D, the measurement device 900 may include a light emitting unit 911, a light receiving unit 912, a dedicated MCU 920, and a main MCU 930. The light emitting unit 911 and the light receiving unit 912 are disposed in parallel to the user's skin. The light receiving unit 912 is formed to sense light emitted from the light emitting unit 911 and transmitted through the user's skin.

Meanwhile, the light emitting unit 911 and the light receiving unit 912 may be formed to be disposed with user's skin tissues interposed therebetween. For example, the light emitting unit 911 and the light receiving unit 912 may be formed such that the measurement device 900 is installed in a finger, an ear lobe, or the like, whose skin tissues are relatively thin.

The light receiving unit may filter an optical change according to a difference between in density between blood flow rates, and amplify the same to form a waveform. The dedicated MCU may be maintained in an activated state or may be controlled to be turned on or off at every pre-set time periodically (e.g., at every several seconds). The light receiving unit 912 transfers information regarding the measured blood flow rate to the dedicated MCU. The dedicated MCU compares the change in the blood flow rate received from the light receiving unit 912 with a pre-set reference change, and when the change is detected to be a rapid change, the dedicated MCU activates the main MCU 930.

- In addition, the main MCU may collect period patterns of the user's heartbeat based on the information collected by the light receiving unit 912. For example, the main MCU can generate heart rate variability (HRV) information. A rate of heartbeat can then be analyzed through the HRV information, and thus the user's excited condition may be estimated.

Body condition information 711 shown in a graph form in FIG. 5A(a) corresponds to the HRV information received from the measurement device 900. Namely, while the user is being provided with the first specific information 610 (e.g., while the display unit 151 is outputting the screen information), the controller 180 can receive the body condition information 711 from the measurement device 900 (S701in FIG. 4). The controller 180 analyzes the user's feelings based on the body condition information 711 (S702), and can estimate the user's feelings through the HRV information.

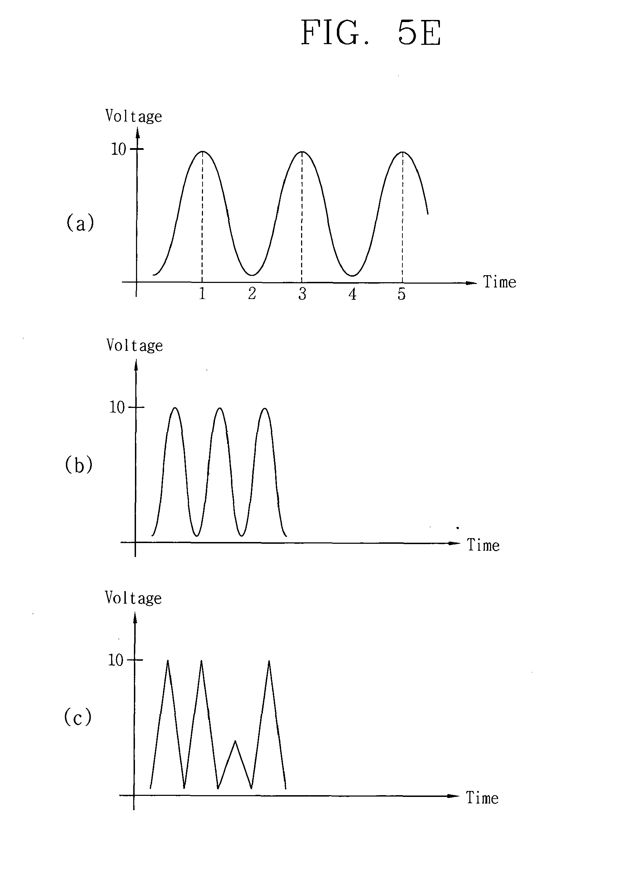

In more detail, FIG. 5E includes graphs showing the body condition information 711 received from the measurement device 900. A method for estimating the user's feelings through the body condition information 711 will be described with reference to FIG. 5E.

In FIG. 5E, (a) is a graph based on a blood flow rate sensed by the measurement device 900 when the user is not excited. When the user is not excited, a heart rate of the user over time is uniformly maintained. Namely, the graph based on a heart rate is has a constant form. The graph based on the user's heart rate may correspond to an average of sensed blood flow rates of the user. Further, the measurement device 900 can store the graph pattern according to the user's blood flow rate in a stable condition in which the user is not excited, and define an average graph pattern as a state in which the user, who put on the measurement device 900, is not excited.

In addition, an error of measurement of heart rates and feeling analysis according to individual differences may be minimized. For example, when a blood flow rate is increased due to an increase in a heart rate, a voltage value corresponding to the y axis in the graph may be increased, and due to the increase in the heart rate, time intervals at which peak points are formed is narrow. That is, the time interval between the peak points is a period of heart rates.

When a heart rate in this state is measured, the dedicated MCU 920 can be controlled not to activate the main MCU 930. Namely, when a graph pattern according to blood flow rates sensed by the light emitting unit 911 and the light receiving unit 912 is different from the graph pattern based on the user's stable condition, for example, when the time difference between peak points is shorter than a pre-set threshold time, when a voltage value is higher than a pre-set reference voltage, or the like, the dedicated MCU 920 can activate the main MCU 930. Accordingly, the controller 180 can receive the body condition information by the activated main MCU 930 when the user is in an excited condition.

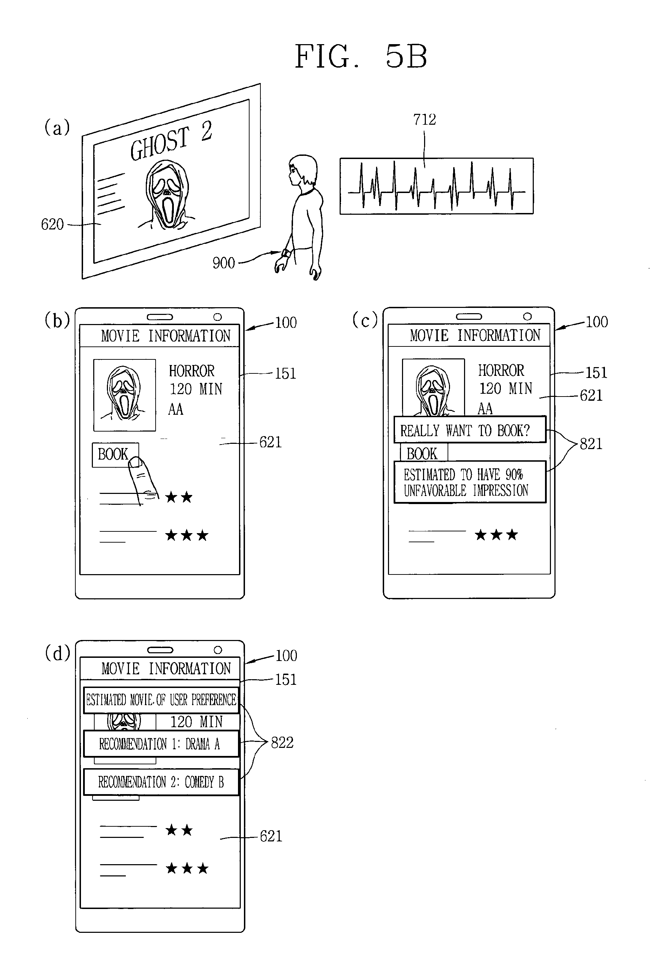

Thus, based on the graph patterns, the measurement device 900 can sense that the user is in an excited condition. For example, in FIG. 5E, (b) shows a graph pattern sensed when the user is in an excited condition from positive feelings. Here, the positive feelings refer to feelings such as gratitude, pleasure, love, happiness, and the like.

When the graph pattern is formed to be regular and has a gently curved shape, the controller 180 can estimate that the user's feelings are in a positively exited condition. Namely, when voltage values of peak points are substantially similar, intervals between peak points are relatively constant, and the shape formed by the peak points is a curve, the controller can determine positive feelings. A pattern in which a voltage value measured in an excited condition is gradually increased may be formed. Thus, the user can determine that he or she is not in a stable state.

Meanwhile, referring to (c) of FIG. 5E, when the graph pattern is relatively irregular, the controller can sense that the user is in an excited condition from negative feelings. For example, when voltage values of the peak points are not regular, intervals between peak points are irregular, and the shape of the peak points are sharp, a negative excited condition exists such as anger, anxiety, fear, and the like.

That is, when the interval between peak points is narrowed, relative to that of the stable condition (or when the voltage value of the peak point is increased), the controller 180 can sense that the user is in an excited condition and determine a positiveness and negativeness of an emotional state through the shapes of the graph patterns. Accordingly, the user can control the mobile terminal in different manners according to the positive excited condition and the negative excited condition.

In addition, referring to FIG. 4, the controller 180 tags the feeling data based on a positive user condition estimated based on the body condition information received by the measurement device 900 to the first specific information 610 (S703). The controller 180 can also control the memory 160 to store the first specific information 610 to which the feeling data is tagged.

Referring to (b) of FIG. 5A, the controller 180 can control the output unit 150 to output content related to at least one of the feeling data and the specific information. For example, the first specific information 610 may correspond to screen information of an Internet shopping mall for purchasing goods (or articles), and first relevant content 810 may correspond to screen information for receiving information for purchasing the goods.

In more detail, the controller 180 estimates positive feelings by using the user's body condition information received while the first specific information 610 is being output. The controller 180 tags the positive feeling data to the specific information. Also, the controller 180 controls the display unit 151 to output the first relevant content 810 corresponding to a stage of purchasing goods included in the first specific information 610 based on the positive feeling data. The controller 180 can control the display unit 151 to change from the first specific information 610 to the first relevant content 810 without a control command applied by the user.

Meanwhile, the controller 180 controls the memory 160 to store the feeling data-tagged specific information. Also, the controller 180 can control the memory 160 to classify pieces of information including the specific information based on the feeling data. For example, the controller 180 can arrange pieces of information in order of preference based on the feeling data, and control the display unit 151 to display at least one information having feeling data, selected based on a user's touch input applied to the display unit 151, tagged thereto, together with the pieces of specific information.

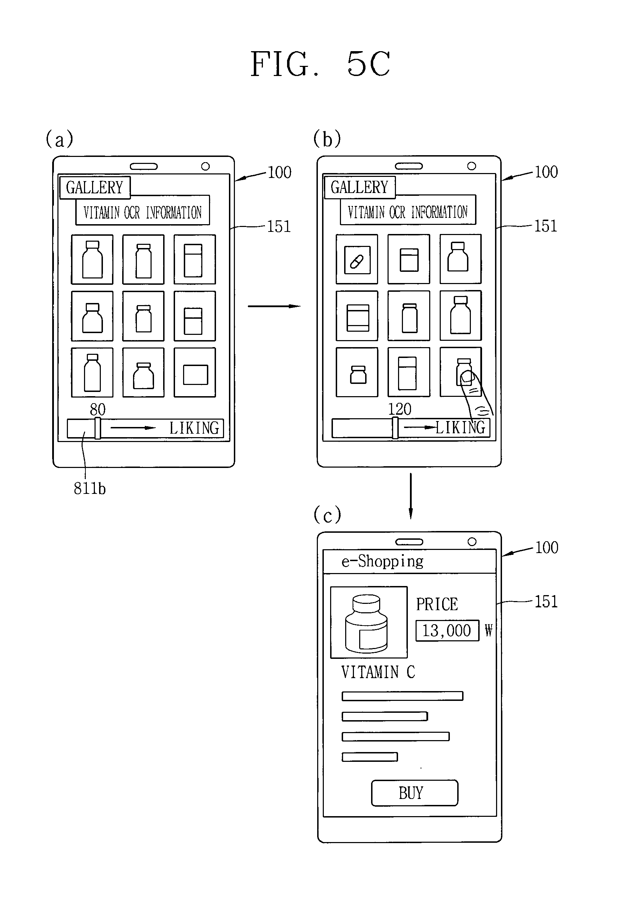

For example, referring to (c) of FIG. 5A, the controller 180 can determine a plurality of stages of preference by using the feeling data, and control the memory 160 or the display unit 151 to output the pieces of information according to the preference. The pieces of information arranged in order of preference may substantially correspond to the same category, but the present inventive concept is not limited thereto. In FIG. 5A, (c) shows screen information outputting pieces of information 811a classified and stored according to preference. Further, the controller 180 can control the display unit 151 to output content related to the feeling data.

In addition, the controller 180 can automatically store specific information, which is not separately stored by the user, by using the feeling data. For example, the pieces of information classified based on the feeling data may correspond to pieces of image information, and the pieces of image information may be stored in a storage space of a gallery application.

Accordingly, while specific information is being provided to the user, content related to the specific information is provided according to the user's feelings, and thus, the user can be provided with the content without a separate control command. Also, while specific information is being provided by the mobile terminal 100, feeling data is tagged thereto and stored without a user's control command and the specific information is classified according to the feeling data, and thus the user can be provided with the information regarding particular feelings. Therefore, the user can be provided with contents unconsciously only with memories including feelings without a control command.

Next, FIGS. 5B and 5C are conceptual views illustrating the control method of FIG. 4. Referring to FIG. 5B, a control method of a mobile terminal based on negative feeling data will be described. In FIG. 5B, (a) illustrates a user provided with second specific information 620 from the outside. While the second specific information 620 is being received, the user's feeling data 712 is received from the measurement device 900.

The controller 180 can analyze the feeling data 712 to estimate that the user has negative feelings. The controller 180 can also obtain the second specific information 620 provided from the outside. For example, the controller 180 can receive a sound related to the second specific information 620 through the microphone 122 or may obtain an image of the second specific information 620 through the camera 121.

For example, as illustrated in FIG. 5B, when a medium for promoting movie is obtained through the camera 121, the controller 180 can tag the feeling data to the second specific information 620, and control the memory 160 to store the second particular information 620 having the negative feeling data tagged thereto.

In FIG. 5B, (b) illustrates the display unit 151 outputting screen information 621 including information substantially the same as the second specific information 620. For example, the screen information 621 corresponds to a Web page for booking movie included in the second specific information 620.

As shown in FIG. 5B(c), when a control command for booking the movie is applied, the controller 180 can control the display unit 151 to output first additional content 821 related to the feeling data tagged to the second specific information 620. For example, the second related content 821 may include an alarm phrase (really want to book?) asking whether the user wants to book movie) or a phrase (estimated to have 90% unfavorable impression) describing the feeling data. Thus, the user can recall that he or she had a negative feeling about the movie to be booked in the past, and make a decision accordingly.

Also, the controller 180 can control the display unit 151 to output the first additional content 821 based on the second specific information 620 and the feeling data 712. For example, as shown in FIG. 5B(d), the controller 180 can control the display unit 151 to provide move-related content 822 to which a positive feeling data is tagged, among information stored in the past based on a category of the second specific information 620 and the negative feeling data.

When information currently output by the mobile terminal 100 is matched to specific information to which the user's feeling data is tagged, the controller 180 controls the output unit 150 to provide the corresponding information to the user. Accordingly, the user can be provided with a chance to consider performing of a function using the currently output information.

Next, FIG. 5C is a conceptual view illustrating a control method of classifying and storing specific information tagged to feeling data. The controller 180 can control the memory 160 to image the pieces of specific information to which a plurality of feeing data is tagged, respectively, and store the same, and also control the display unit 151 to output the feeling data and the pieces of specific information. For example, the controller 180 can control the display unit 151 to output an icon 811b indicating the feeling data. The controller 180 can control the display unit 151 to output at least one specific information to which the specific feeling data is tagged, based on a touch input applied to the icon 811b as shown in FIG. 5C(b) and (c).

When the particular information corresponds to a purchase page for purchasing goods (or articles), the controller 180 can form a hyperlink in the imaged specific information. That is, the controller 180 can control the display unit 151 to output a Web page corresponding to the specific information based on a touch input applied to the specific information. Thus, the user can be provided with information toward which he or she was propathetic, although he or she did not make a record of it, and may immediately perform an additional function by using the information.

According to the present embodiment, when the user has a special feeling without a control command, the mobile terminal 100 memorizes specific information provided to the user from the mobile terminal 100 or from the outside, tags feeling data thereto, and store the same. Also, when the user is provided with information the same as the specific information or relevant information, the mobile terminal 100 can provide feeling data tagged to the specific information to the user. Accordingly, the user may recall a change in feelings changing unconsciously by the specific information included in an ambient environment.

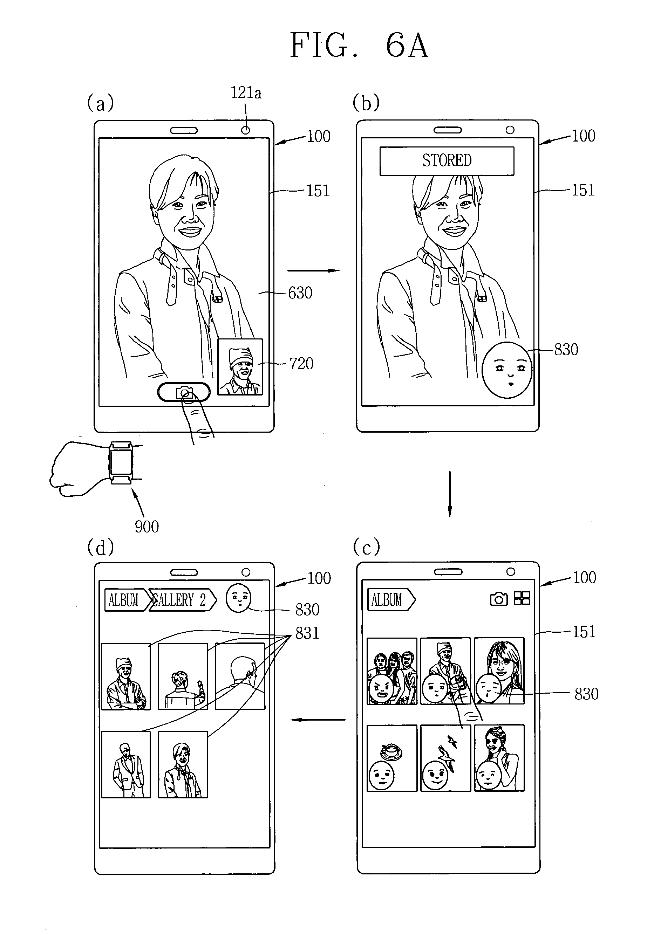

FIGS. 6A through 6C are conceptual views illustrating control methods of a mobile terminal according to various embodiments of the present invention. A control method of tagging feeling data generated while an image is obtained, to the image will be described. In particular, FIG. 6A is a view illustrating a situation in which an image is obtained by the camera 121 (FIG. 6A illustrates the front camera 121a).

While an image is being obtained through the camera 121, the user recognizes a preview screen output to the display unit 151 through the camera 121, as third specific information 630. Also, the user senses an ambient environment, as well as the preview provided through the display unit 151.

While an image is being obtained through the camera 121, the controller 180 can receive the user's body condition information by the measurement device 900. Also, while an image is being obtained by using the rear camera 121b, the controller 180 can control the front camera 121a to capture the user's face 720. For example, when a control command for controlling the rear camera 121b is applied to image an ambient environment, the controller 180 can operate the front camera 121a based on the control command.

The controller 180 analyzes the user's feelings by using at least one of the captured image of the user's face and the body condition information received from the measurement device 900. The controller 180 can tag the user's feeling data to the obtained image.

For example, the controller 180 controls the memory 160 to store the obtained image 630 based on an additional control command from the user. Also, the controller 180 can control the memory 160 to visualize the feeling data to generate third relevant content 830 and control the memory to store the third relevant content 830 together with the image 630 as shown in FIG. 6A(b) and (c). Also, the controller 180 can control the display unit 151 to output the third relevant content 830 such that it overlaps with the image 630.

That is, referring to (b) of FIG. 6A, the controller 180 can image the feeling data to generate the third relevant content 830 and control the display unit 151 to output the third relevant content 830 such that it overlaps with the image 630. Also, the controller 180 can control the memory 160 to classify a plurality of images to which various types of feeling data are tagged as content, based on the feeling data, and store the same as shown in FIG. 6A(c).

In particular, FIG. 6A(c) illustrates an executed screen showing storage spaces of a gallery application. The controller 180 can control the memory 160 to store images to which corresponding feeling data are tagged in the divided spaces related to the different types of feeling data. Also, the controller 180 can control the display unit 151 to output relevant content 830 obtained by visualizing different types of feeling data to folder images corresponding to respective feeling data and representing divided spaces in which respective images are stored.

The controller 180 can control the display unit 151 to output second additional content 831 corresponding to at least one image to which the selected feeling data is tagged, based on the touch input applied to the folder representing any single feeling data. Namely, the controller 180 classifies feelings of the user into different types of feeling data. For example, feeling data may be classified into laughing, anger, sadness, happiness, tension, and the like, based on the body condition information. Respective feeling data may be generated as visualized third relevant content 830, and the third relevant content 830 may correspond to an image, text, or the like, describing a human being's expression.

Namely, the controller 180 store the provided specific information together with the feeling data of the user, and store the same category based on the feeling data. Accordingly, the user may recall his feelings with respect to specific information and may be conveniently provided with various types of specific information.

A control method of providing information based on feeling data according to another embodiment of the present invention will be described. As described above with reference to FIG. 6A, while an image is being obtained through the camera 121, the controller 180 controls the memory 160 to tag the generated user's feeling data to the image and store the same. Also, the controller 180 controls the display unit 151 to output the image to which the feeling data is tagged.

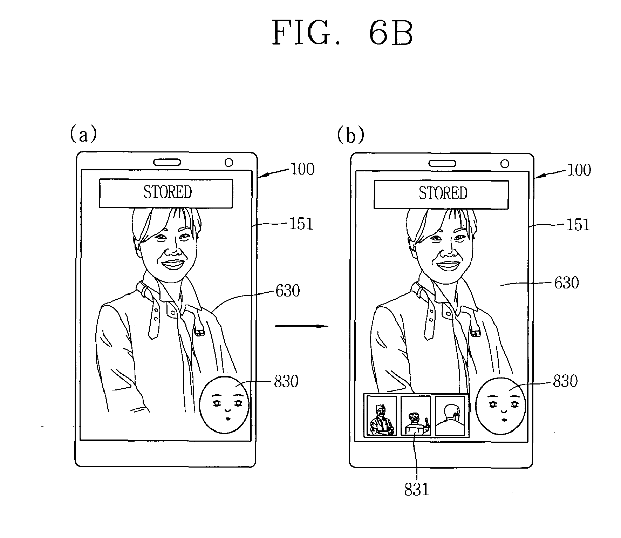

Referring to FIG. 6B, the controller 180 can control the display unit 151 to output second additional content 831 related to the third relevant content 830 based on a touch input applied to the third relevant content 830 corresponding to the feeling data output to the display unit 151.

For example, the controller 180 can control the display unit 151 to output different images to which feeling data substantially the same as feeling data of the third relevant content 830. The different images may be output in the form of thumbnail views. Accordingly, the user can be provided with different information related to the feeling data rapidly by using the third relevant content tagged to the image.

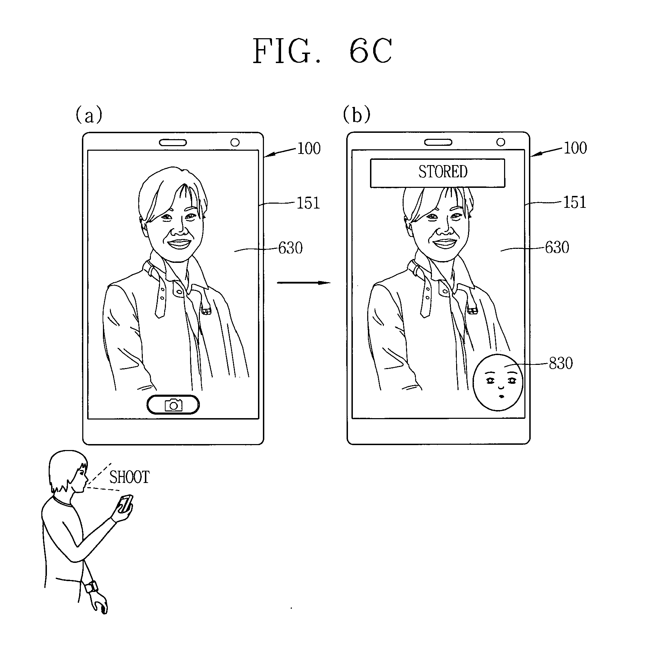

A control method of generating the feeling data by sensing a user's voice will be described with reference to FIG. 6C. In FIG. 6C, (a) is a view illustrating a situation in which the camera 121 is controlled to capture an ambient environment upon receiving a user's voice. In order to receive the user's voice, the controller 180 activates the microphone 122. The controller 180 can control the front camera 121a or the rear camera 121b by using the user's voice.

The controller 180 receives body condition information at the time when the image is obtained by the measurement device 900, and analyzes the voice received through the microphone 122. The controller 180 generates the user's feeling data based on the body condition information and the analyzed voice. For example, the controller 180 can analyze attributes such as nuance, the volume, speed, pitch, and the like, of the voice to estimate the user's feelings.

The controller 180 can control the memory 160 to tag the third relevant content 830 obtained by imaging the feeling data to the image and store the same. According to the present embodiment, because the user's voice input to control the mobile terminal, as well as the body condition information, is used as a base to generate the feeling data, the user's feelings can be more accurately recognized.

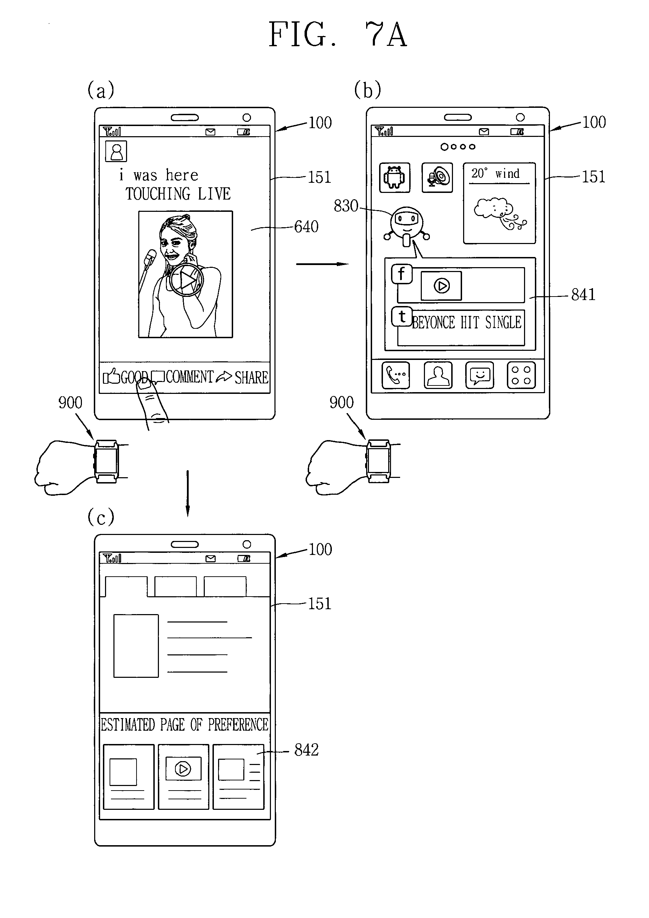

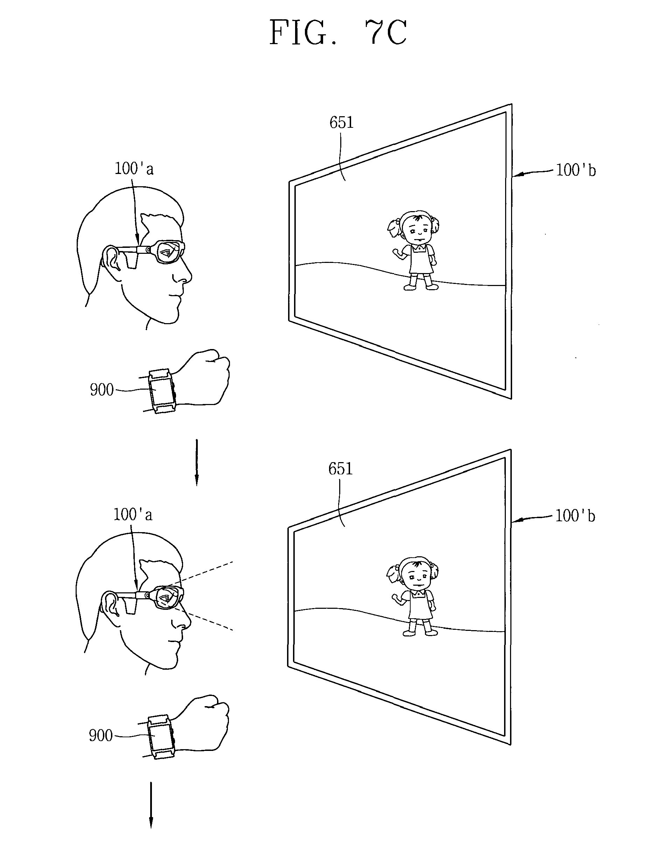

Next, FIGS. 7A through 7D are conceptual views illustrating control methods to provide the user's feeling data or specific information to which feeling data is tagged and additional content.

A control method to provide content similar to specific information to which feeling data is tagged will be described with reference to FIG. 7A. Referring to FIG. 7A, the controller 180 receives the body condition information through the measurement device 900 while fourth specific information 640 is being output through the output unit 150.

In more detail, while the fourth specific information 640 is being output, the controller 180 can receive body condition information at the time when a touch input is applied to the display unit 151 to perform a function related to the fourth specific information 640. For example, when sub-information (e.g., ripples, evaluations, and the like, with respect to some posts) interworking with the fourth specific information 640 is input to the display unit 151 outputting the fourth specific information 640, or when a touch input for sharing the fourth specific information 640 is applied, the controller 180 can recognize the user's feelings.

The controller 180 can control the memory 160 to tag the feeling data to the fourth specific information 640 or attributes of the fourth specific information 640 and store the same. Here, the attributes of the fourth specific information 640 may correspond to a category, a source, and a higher category of the fourth specific information 640, a genre of contents included in the fourth specific information 640, and the like.

For example, when feeling data corresponding to pleasure is generated, while the fourth specific information 640 corresponding to a video file corresponding to a concert scene of a ballad singer received by using wireless communication is being output, will be described. The controller 180 downloads the video as a file from the wireless communication unit, and controls the memory 160 to tag the feeling data to the video file and store the same.

Alternatively, the controller 180 may determine attributes of the video by utilizing different information, and the like, output together with the video to the display unit 151. For example, the controller 180 can extract a type of information of video, information regarding a singer included in the video, a concert, a title of a song, a genre of the song, and information regarding lyrics, and control the memory 160 to tag the felling data to the extracted information and store the same.

Referring to (b) of FIG. 7A, when the users' feelings are changed, the body condition information is received from the measurement device 900. The controller 180 generates the feeling data from the body condition information and searches the memory 160 for content matched to the feeling data. For example, the controller 180 can control the output unit 150 to output third additional content 841 to which feeling data corresponding to pleasure is tagged.

The third additional content 841 is information which has been stored because the user felt joy about that when it was provided to the user in the past. Further, the controller 180 can control the output unit 150 to automatically provide the additional content when body condition information is received from the measurement device 900 even when the user does not manipulate the mobile terminal, as well as when he user uses the mobile terminal. FIG. 7A(b) illustrates an image 520 indicating an artificial intelligence-type agency of the mobile terminal being activated to produce the third additional content 841.

For example, when feeling data corresponding to the user's sadness is generated, the controller 180 can activate the mobile terminal 100 from a deactivated state thereof, and control the display unit 151 to output additional content based on the feeling data. Accordingly, when the user have specific feelings, the user can be provided with content assisting the feeling.

Referring to (c) of FIG. 7A, the controller 180 can search additional contents related to the fourth specific information 640, and there is no limitation in a source for searching. For example, when the controller 180 approaches a source from which the content 640 is provided, the controller 180 can search the source for the information related to the fourth specific information 640.

In more detail, approaching the source may correspond to an access to a specific Web site including various types of content, activation of an SNS application, and the like. When the feeling data is positive feelings, the controller 180 can search content similar to the fourth specific information. For example, the controller 180 can search content having an attribute which overlaps with (or which is the same as) that of the fourth specific information. In another example, the controller 180 can search a video in which a singer is included in the video, from the Web. When feeling data regarding negative feels is generated by the user, or when the mobile terminal 100 approaches the source, the controller 180 can control the output unit 150 to output the additional content 842.

According to the present embodiment, the controller 180 can automatically provide information related to the user's feelings and specific information to which feeling data is tagged, to help better the user's feelings or rapidly provide information required for the user.

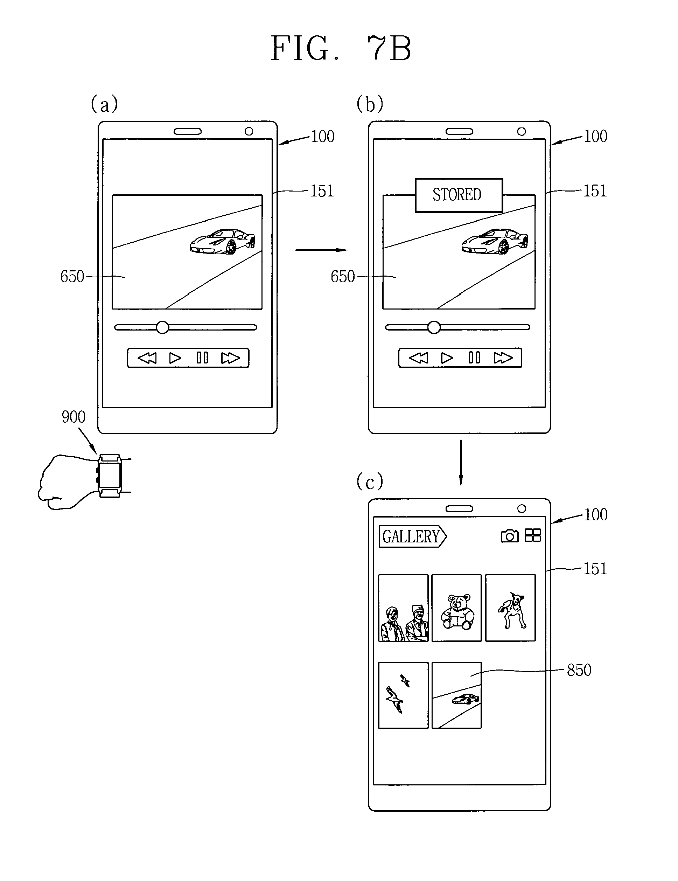

A control method to automatically store specific information based on the user's feeling data will be described with reference to FIG. 7B. While fifth specific information 650 is being output by the mobile terminal 100, the controller 180 can generate the user's feeling data. For example, the fifth specific information 650 may correspond to a reproduced screen of a video file changing over the lapse of time.

When the feeling data generated while the fifth specific information 650 is being output is identical to pre-set specific feeling data, the controller 180 can control the memory 160 to image the fifth specific information 650 and store the same. For example, the controller 180 can control the memory 160 to image (or capture) the screen information on the display unit 151 at a time when the feeling data is identical to the pre-set particular feeling data, and store the same.

In more detail, the reproduced screens of the video file moving according to the lapse of time may include the user's feelings changed according to reproduced screens, and the user may store the image of the fifth specific information 650 without a control command while he or she is viewing the reproduced screens. However, the present invention is not limited thereto and the controller 180 can control the mobile terminal to record the video of the fifth specific information 650, record reproduced hearing data, and the like.

Referring to (c) of FIG. 7B, the controller 180 can control the memory 160 to store an image of the fifth specific information 650 in a storage space of the gallery application. Namely, the controller 180 can control the display unit 151 (and the speaker) to output a partial image 850 (or recorded video and hearing data) of the fifth specific information to the executed screen of the gallery application.

A control method to store a portion of fifth specific information 651 in the mobile terminal 100 according to another embodiment will be described with reference to FIG .7C. A mobile terminal 100'a according to the present embodiment corresponds to wearable glasses that may be put on the user's face. The mobile terminal 100'a according to the present embodiment may further include a camera formed to image an ambient environment in the same direction as that of the user's eyes.

Also, the measurement device 900 may be installed in the mobile terminal 100'a. The user can be provided with the fifth specific information 651, which is output by the external image display device 100'b, through the mobile terminal 100'a. The fifth specific information 651 may be deformed by the mobile terminal 100'a and provided to the user.

While the image (including video) is being provided from the image display device 100'b, the controller 180 can receive the user's body condition information by the measurement device 900 and generate feeling data. However, the measurement device 900 may be installed in the mobile terminal 100'a put on the user's face. For example, the measurement device 900 may be disposed in a region of the mobile terminal 100'a.

When the feeling data is identical to the pre-set feeling data, the controller 180 can control a camera installed in the mobile terminal 100'a to obtain an image output from the image display device 100'b. Meanwhile, when the fifth specific information 651 is deformed and provided by the mobile terminal 100'a, the controller 180 can control the mobile terminal 100'a to store a portion of the deformed specific information. That is, specific information provided from the outside may be stored without a user's control command.

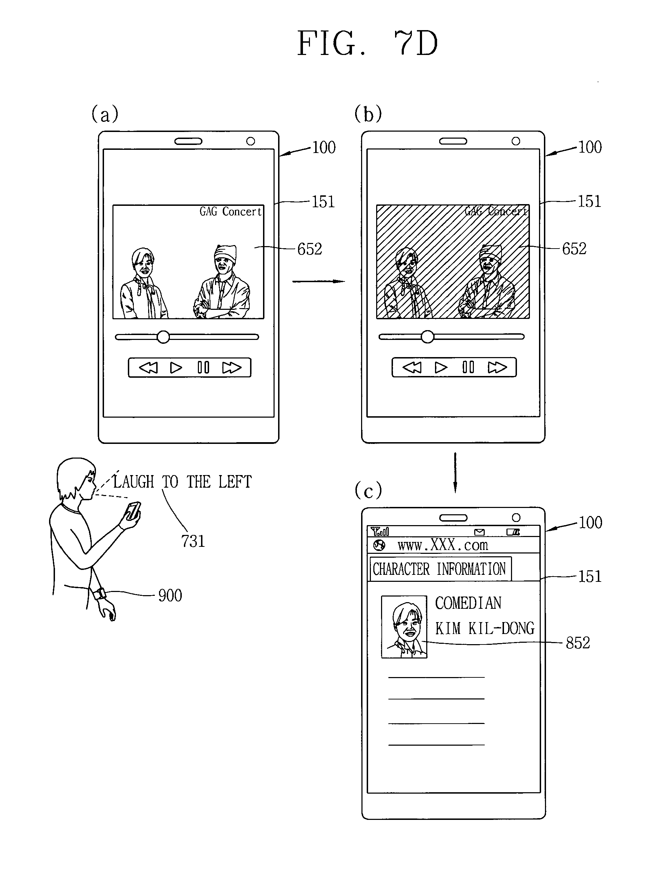

A control method to provide results of searching data included in the specific information will now be described with reference to FIG. 7D. Referring to (a) of FIG. 7D, while fifth specific information 652 is being output to the display unit 151, the controller 180 receives the user's body condition information. The controller 180 generates feeling data according to the body condition information. The controller 180 can control the memory 160 to store the fifth specific information 652 based on the feeling data. The controller 180 can also control the memory 160 to temporarily store the fifth specific information 652.

Further, the controller 180 can perform an additional function by using the fifth specific information 652 stored in the memory 160. For example, the controller 180 can search data included in the fifth specific information 652 and provide a search result to the user. For example, while the fifth specific information 652 is being provided, the controller 180 can select data to be searched from the data through a voice input 731 to the microphone 122 by the user.

Referring to (a) of FIG. 7D, the controller 180 can analyze the user's voice 731 (e.g., an exclamation, and the like, laugh to the left), rather than a control command, and select data to be searched from among the fifth specific information 652. The controller 180 can output notification that a portion of the fifth specific information 521 will be stored and an additional function will be performed. For example, the controller 180 can control the output unit 150 to output blinking or output a short notification sound as shown in FIG. 7D(b).

When outputting of the fifth specific information 652 is terminated, the controller 180 can control the display unit 151 to output fourth additional content 852 corresponding to the search result. While the fifth specific information 652 is being output, the controller 180 can output a pop-up window overlapping with the fifth specific information 652, and control the display unit 151 to display the search result in the pop-up window as shown in FIG. 7D(c).

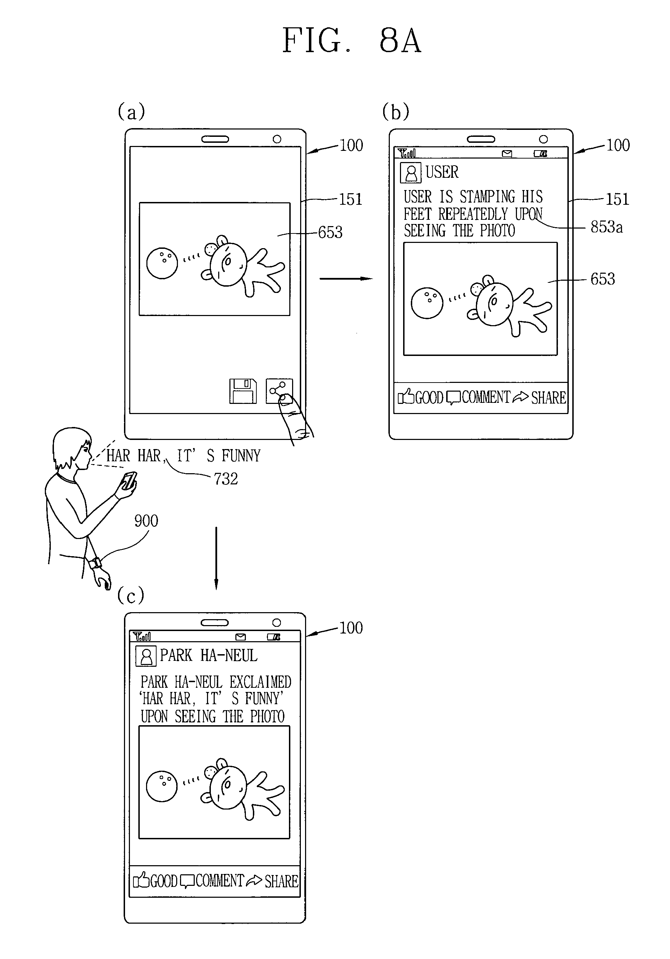

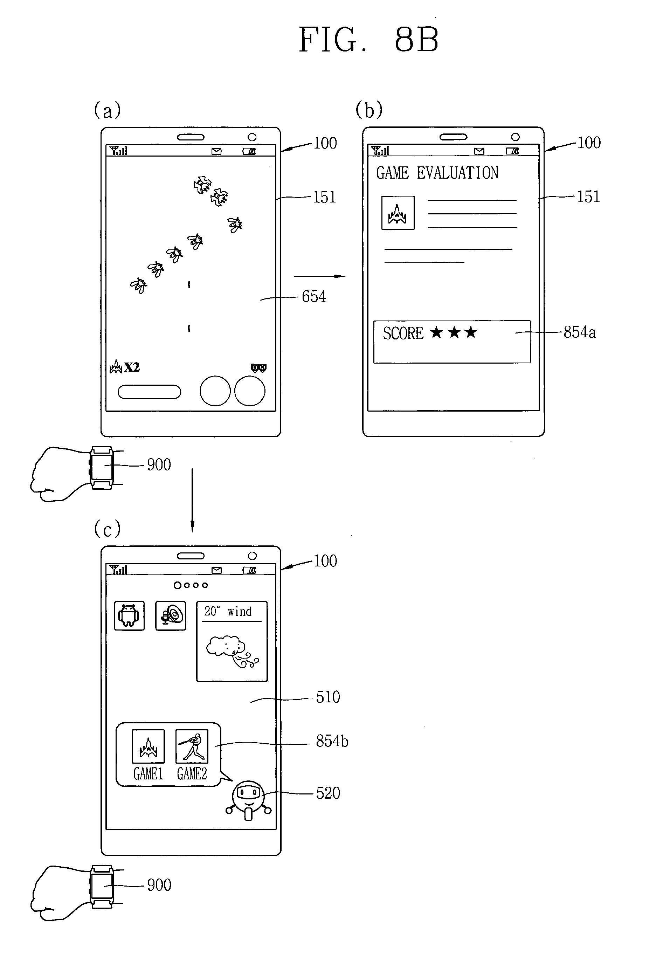

Next, FIGS. 8A and 8B are conceptual views illustrating control methods to output user's feeling data as content. A control method to output the user's feeling data as text will be described with reference to FIG. 8A. The controller 180 generates feeling data of the user who receives the fifth specific information 653.

The controller 180 can control the display unit 151 and the wireless communication unit 110 to share the fifth specific information 653 based on a control command from the user to share the fifth specific information 653 or upload it to a Web site. The controller 180 can generate the feeling data while the fifth specific information 653 is being provided, into content, and control the display unit 151 to upload the fifth specific information 653 and feeling data 853a as content together, and output the same.

For example, the controller 180 can control the display unit 151 to output text describing a user's emotional state based on the feeling data or output text describing a user's behavior sensed through the camera 121. Also, the controller may control the display unit 151 to output text or image which corresponds to each feeling data and has been stored in the memory. Referring to (c) of FIG. 8A, the controller 180 can control the display unit 151 to change a user's voice input through the microphone 122 into text and output the same together with the fifth specific information 652.

A control method to generate evaluation information by using feeling data will be described with reference to FIG. 8B. Referring to FIG. 8B, (a) of FIG. 8B illustrates an executed screen 654 of the application executed by the user. While the mobile terminal is executing a game application, the controller 180 receives body condition information from the measurement device 900.

The controller 180 can generate the feeling data by using the body condition information, and tag the feeling data to the game application. Namely, the controller 180 can tag the user's feeling data to the information regarding an application installed in the mobile terminal and store the same.

The controller 180 can generate information evaluating the application as fourth additional content 854a by using the feeling data. For example, the controller 180 can upload the application evaluation information to a Web without a control command. Also, when the application information is output according to a control command from the user, the controller 180 can control the display unit 151 to output the fourth additional contents 854a together. Further, preference that the user had feeling therefor in the past may be automatically provided together with the application information.

Meanwhile, referring to (c) of FIG. 8B, when the user's body condition information is received from the measurement device 900, the controller 180 can control the display unit 151 to recommend an application to which feeling data related to the body condition information is tagged.

Here, the feeling data related to the received body condition information may correspond to data which is the opposite of the user's feelings included in the body condition information. For example, when the user's feelings recognized based on the received body condition information are negative feelings, the controller 180 can control the display unit 151 to output an icon 854b receiving a touch input applied to execute an application to which the user's feeling data of pleasure is tagged.

When body condition information is received from the measurement device 900 when the mobile terminal is turned on, the controller 180 can recommend an application, or the like. For example, the controller 180 can control the display unit 151 to output the icon 854b of the recommended application to the basic home screen 510 in an idle state in which no application is executed.

Meanwhile, information recommended and output by the controller 180 is not limited to the icon 854b of the application and may correspond to content (e.g., text, a media file, an image, and the like) to which specific feeling data is tagged. Thus, the user can be automatically provided with an application, or the like, helpful for the user's feeling without a control command, and use an application, or the like, provided according to a user selection.

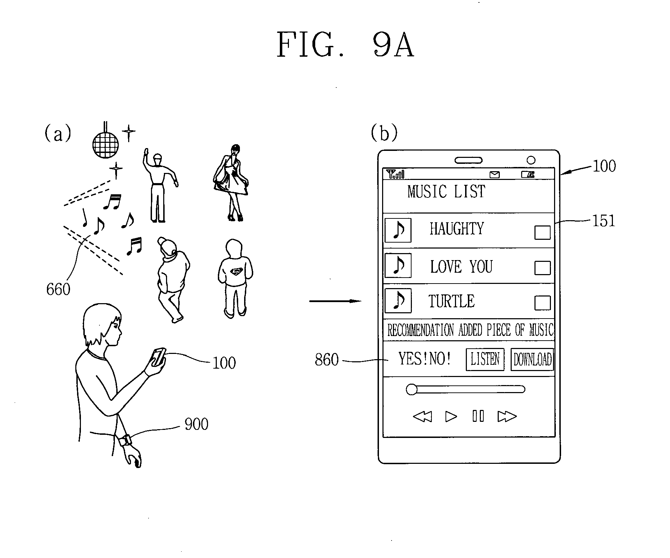

Next, FIGS. 9A through 9C are conceptual views illustrating methods for outputting content based on specific information provided from various sources. A control method to output content based on specific information provided from the outside of the mobile terminal will be described.

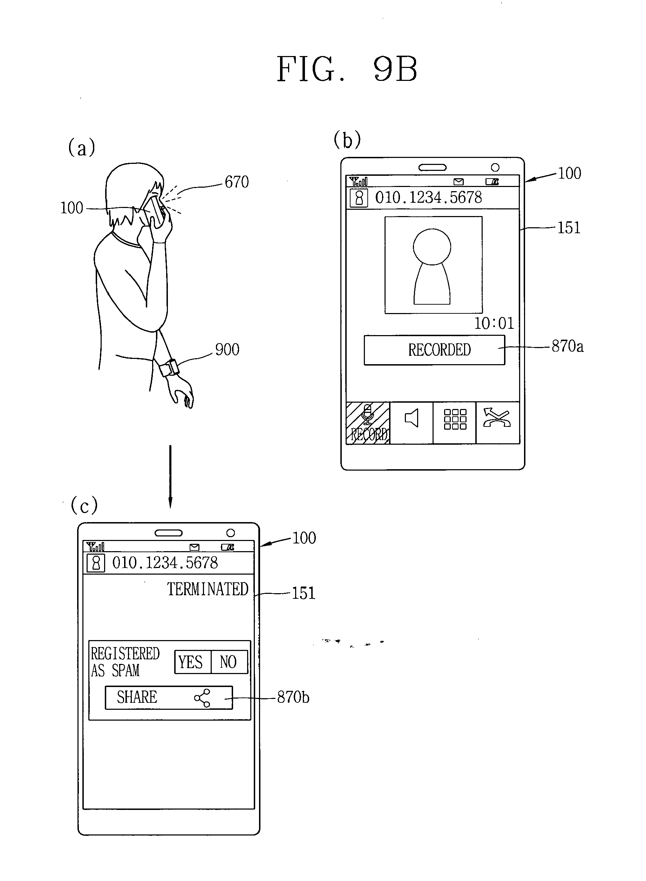

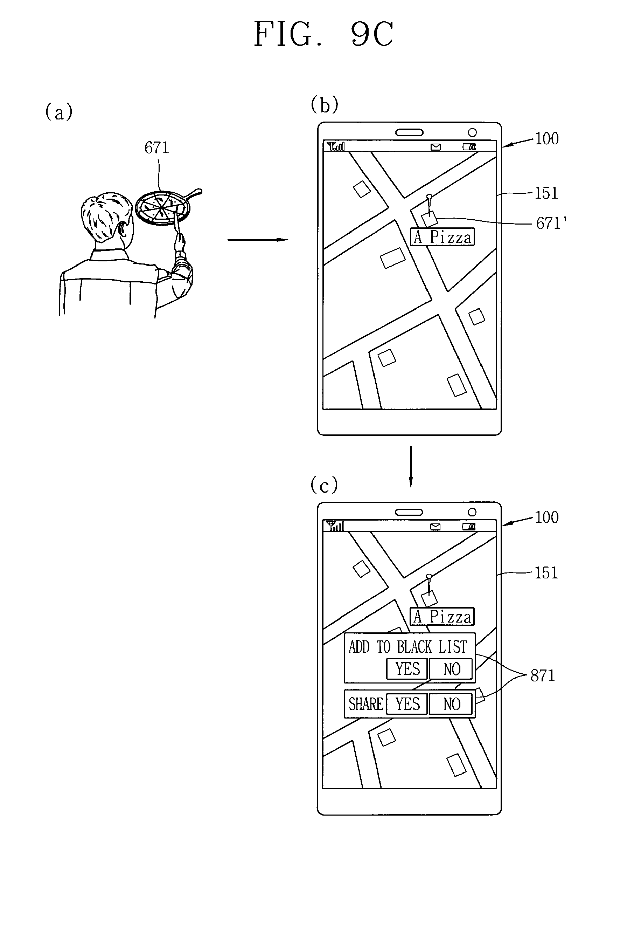

In FIG. 9, (a) is a conceptual view illustrating music being provided to the user from the outside of the mobile terminal. When the user's body condition information is received from the measurement device 900, the controller 180 can activate at least one of the microphone 122 and the camera 121 for obtaining sixth specific information 660 provided from the outside.

The controller 180 can activate the microphone 122 to receive signal heard (music sound) as the sixth specific information provided to the user, and receives the hearing signal. While the hearing signal is being received, the controller 180 can analyze the body condition information received from the measurement device 900 and generate feeling data, and control the memory 160 to tag the feeling data to the sixth specific information 660 and store the same.

Also, the controller 180 can search the received sixth specific information 660 to collect data related to the sixth specific information 660. The controller 180 controls the display unit 151 to output the sixth relevant content 860 related to the sixth specific information 660. The related sixth relevant content 860 may correspond to data stored in the memory 160 or data searched by using the sixth specific information.

Referring to (b) of FIG. 9A, the user's feeling data is tagged to the sixth specific information 660 that is music sound, and the controller 180 can control the display unit 151 to output the sixth relevant content 860 searched based on the sixth specific information 660. The sixth relevant content 860 may be output to an executed screen of the application outputting music. For example, the sixth relevant content 860 may include an icon for receiving a user's touch input to reproduce and download music, a title and lyrics of music, and the like.

Accordingly, the mobile terminal 100 can automatically collect specific information provided from the outside at a time when the user's feelings are changed, as well as when the specific information is provided through the mobile terminal. Also, since the specific information provided from the outside and the user's feeling data are stored and provided together, the user can be provided with information that may be passed unconsciously without a control command.

FIG. 9B is a view illustrating a control method to collect specific information in a call mode of the mobile terminal based on the user's feeling data and provide relevant content. Referring to (a) and (b) of FIG. 9B, the controller 180 receives the body condition information from the measurement device 900 in a call mode of the mobile terminal, and generate feeling data by using the body condition information.

When the feeling data generated in the call mode is matched to pre-set reference feeling data, the controller 180 can control the memory 160 to record voices transmitted and received in the call mode. When the call mode is terminated, the controller 180 can control the display unit 151 to output seventh related content 870a indicating that voices in the call mode have been recorded in the memory 160.

For example, when a touch input is applied to the seventh relevant content 870a, the controller 180 can control the speaker to output the recorded voice. Also, the controller 180 can control the memory 160 to tag the feeling data to the voice and store the same together. Meanwhile, when the feeling data generated in the call mode is matched to pre-set reference feeling data, the controller 180 to control the memory 160 to tag the feeling data to a phone number of the connected external terminal and store the same.

Also, the controller 180 can control the memory 160 to store the phone number of the external terminal to which the feeling data is tagged, as a spam number. Accordingly, the controller 180 can control the wireless communication unit 110 to cut off any communication received from the phone number to which the feeling data is tagged.

Namely, after the call is terminated, the controller 180 can control the display unit 151 to output seventh relevant content 870b ascertaining whether communication with the external terminal is to be cut off. Also, the seventh relevant content 870b may include an icon (sharing) receiving a touch input to share information of the external terminal to which the feeling data of the user is tagged.

The controller 180 can analyze a voice of the user received through the microphone 122 of the mobile terminal and a voice of a counterpart output through the speaker 153, as well as the body condition information received from the measurement device 900, to generate the feeling data. Accordingly, after terminating the call, the user can recognize his or her emotional state in the call mode and check content of the telephone conversation. Also, when the user has pre-set feelings without a control command, a call from the phone number of the external terminal of the corresponding counterpart may be cut off.

Thus, even in a situation in which the user cannot control the mobile terminal while on the phone telephone conversation may be stored and the user can be provided with the telephone conversation when necessary.

A control method of providing content according to the user's feeling data by using information regarding a location of the mobile terminal will be described with reference to FIG. 9C. In FIG. 9C, (a) illustrates a situation in which the user eats some food at a particular location 671. Referring to (b) of FIG. 9C, when a body condition information is received from the measurement device 900 while the user is at the particular location 671, the controller 180 can control the sensing unit (e.g., a GPS) to search the particular location 671.

The controller 180 can control the display unit 151 to output map information 671' of the particular location 671. The controller 180 can control the display unit 151 to tag the feeling data to the map information 671', and control the display unit 151 to output the seventh relevant content based on the feeling data and the map information 671'.

Referring to (c) of FIG. 9C, the seventh relevant content 871 may include an icon (added to a black list) for receiving a touch input for tagging the feeling data based on a current feeling situation to the map information and storing the same, an icon (sharing) for receiving at touch input for sharing the feeling data-tagged map information, and the like. The controller 180 can control the display unit 151 to output the seventh relevant content to the map information 671'.

Namely, the user may tag his or her feeling data to a place in which the particular he or she did outdoors, and store and share information regarding the place in which the feeling data was tagged.

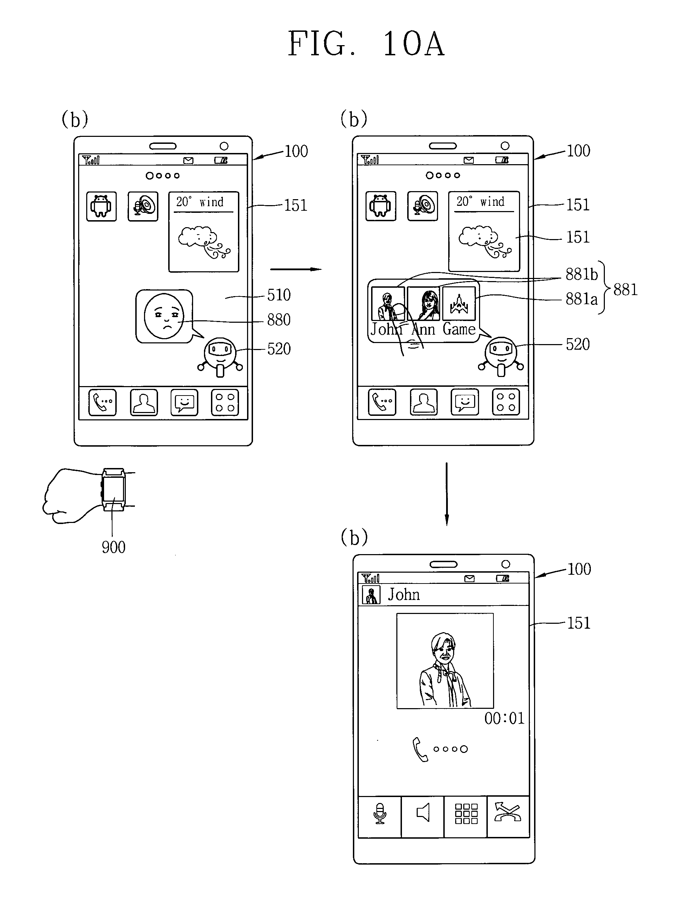

Next, FIGS. 10A through 10C are conceptual views illustrating control methods to provide content including information regarding an external terminal to a user by using the user's feeling data and feeling data of the external terminal. A control method for recommending various applications based on the user's feeling data will be described with reference to FIG. 10A.

Referring to (a) of FIG. 10A, the controller 180 generates the user's feeling data based on body condition information received from the measurement device 900. The controller 180 controls the display unit 151 to output an image 520 indicating an artificial intelligence-type agency 520 of the mobile terminal. For example, the agency 520 receives a user's command by using the user's voice recognition or input text and performs a corresponding function, and the display unit outputs information indicating that a pre-set function has been automatically performed without a control command, together.

The controller 180 controls the display unit 151 to output eighth relevant content 800 indicating the generated user's feeling data. Also, the controller 180 can control the display unit 151 to output fourth additional content 881 related to the feeling data. For example, the fourth additional content 881 may include an execution icon 881a for receiving a touch applied to execute a recommended application. For example, when the feeling data of the eighth related content is negative feeling data, the controller 180 can provide the application to which positive feeling data is tagged, as the fourth additional content 881.

Also, the fourth additional content 881 may include a call icon 881b for receiving a touch input to transmit a call to an external terminal. The controller 180 can recommend that the user should talk over the external terminal of the counterpart to which the positive feeling data is tagged.

Accordingly, when the mobile terminal is turned on, the controller 180 can automatically provide recommended content according to the user's feelings. Accordingly, the user can be provided with desired information according to his or her feelings, may be provided quickly with a desired application, and may control his or her feelings by manipulating the mobile terminal.

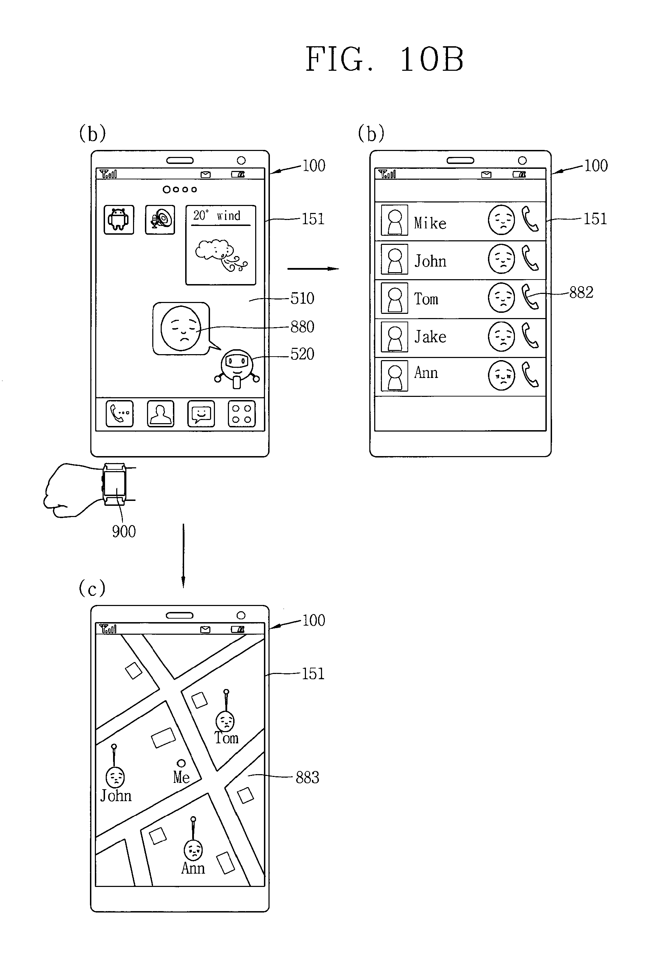

A control method of receiving feeling data of a counterpart and providing the same to the user will be described with reference to FIG. 10B. The controller 180 controls the display unit 151 to output the eighth relevant content 880 indicating the user's feeling data. The eighth relevant content 880 may include a facial image, a photograph, and the like, reflecting the user's feeling data.

Also, the controller 180 controls the wireless communication unit 110 to receive the user's feeling data of external terminals available for wireless communication from the external terminals. The controller 180 extracts an external terminal that has transmitted feeling data corresponding to the eighth relevant content 880 of the mobile terminal from the plurality of feeling data received from the external terminals.

Further, the controller 180 controls the display unit 151 to output fourth additional content 882 including the information regarding the extracted external terminal. The fourth additional content 882 may include a graphic image receiving a touch input for transmitting a call to the external terminal, information (a phone number, a representative name, an image, and the like) regarding the external terminal, an image based on the feeling data received from the external terminal, and the like. In addition, the user can be provided with information regarding users having feelings similar to his or her feelings, and may perform call communication with the users of the external terminals.

Meanwhile, referring to (c) of FIG. 10B, the controller 180 can control the wireless communication unit to receive location data of the extracted external terminals or track locations of the extracted external terminals. The controller 180 can control the display unit 151 to output sixth additional content 883 including the locations of the external terminals. The sixth additional content 883 may include a map image.

Accordingly, the user can be provided with the information regarding the users of the external terminals having the feelings similar to those of the user and the locations of the external terminals, and accordingly, the user may selectively make a phone call to a user.

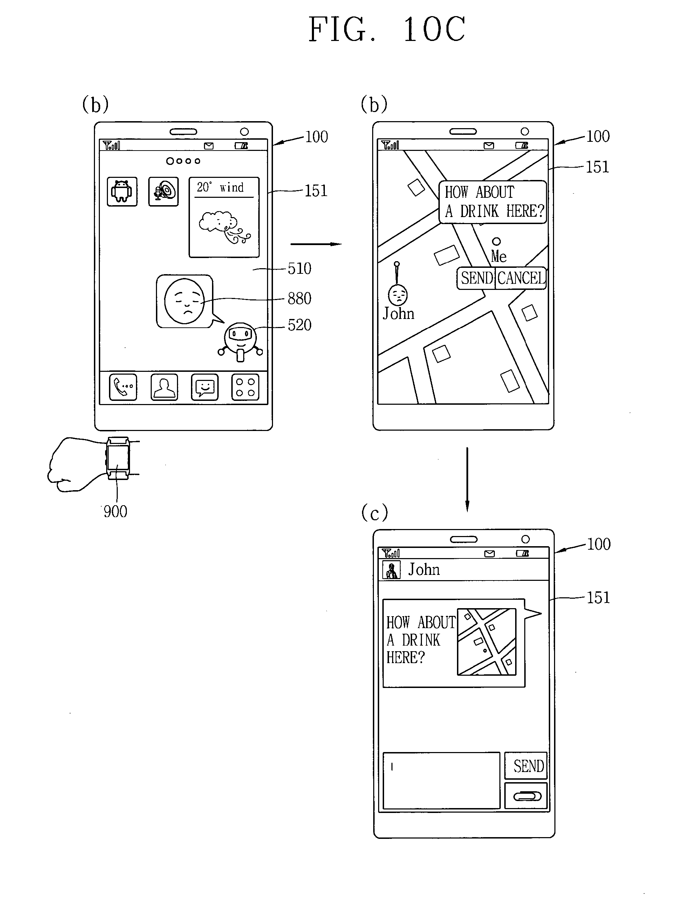

Referring to FIG. 10C, the controller 180 can search at least one place by using the location information of the mobile terminal and that of the external terminal. For example, the controller 180 can search a restaurant located between the external terminal and the mobile terminal 100 and provide information regarding the place to the user.

Also, the controller 180 can control the display unit 151 to output text to be transmitted to the external terminal, based on the information regarding the place and the location information of the external terminal. Based on a user's touch input to send the text, the controller 180 can control the wireless communication unit 110 to transmit the text and the map image to the external terminal based on the user's touch input for sending the text.

Accordingly, the user can easily perform call communication with a user who has the similar feelings. Namely, the artificial intelligent agency of the mobile terminal 100 can automatically provide information that will help the user, based on the received user's body condition information.

The mobile terminal according to the embodiments of the present invention as described above is not limited in its application of the configurations and methods, but the entirety or a portion of the embodiments can be selectively combined to be configured into various modifications.

As the exemplary embodiments may be implemented in several forms without departing from the characteristics thereof, the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A mobile terminal comprising:
an output unit (150) configured to output information;
a receiving device configured to receive information from an external device;
a controller (180) configured to:
receive body condition information about a physical condition of a user while specific information (610, 620, 630, 640, 650, 660) is being received by the receiving device or output by the output unit (150),
analyze the body condition information and estimate an emotional state of the user based on the body condition information,
generate tag information indicating the estimated emotional state of the user,
store the generated tag information with data corresponding the specific information, and
output the generated tag information and the data corresponding to the specific information (610, 620, 630, 640, 650, 660).

2. The mobile terminal of claim 1, wherein the body condition information corresponds to information regarding a heartbeat of the user while the specific information is being received by the receiving device or output by the output unit (150), and
wherein the controller is further configured to estimate the emotional state of the user by analyzing patterns included in the heartbeat information.

3. The mobile terminal of claim 2, further comprising:
a terminal body (100) configured to be attached to a part of the user and including:
a measurement device (900) installed in the terminal body (100) and having at least one surface configured to come into contact with the user's skin; and
a transmitting device configured to transmit the heartbeat information to the receiving unit.

4. The mobile terminal of one of any claims 1 to 3, wherein the output unit (150) includes a display unit (151) configured to display the specific information (610, 620, 630, 640, 650, 660), and
wherein the received body condition information indicates the physical condition of the user viewing the specific information (610, 620, 630, 640, 650, 660).

5. The mobile terminal of claim 4, wherein the specific information includes web page information, and
wherein the generated tag information includes relevant content relevant to the web page information and based on the estimated emotional state of the user.

6. The mobile terminal of claim of one of any claims 1 to 5, wherein the external device outputs the specific information (610, 620, 630, 640, 650, 660) as at least one of video data and audio data, and
wherein the received body condition information indicates the physical condition of the user viewing or listening to the specific information (610, 620, 630, 640, 650, 660).

7. The mobile terminal of claim 6, wherein the data corresponding to the specific information corresponds to web page information, and
wherein the generated tag information includes relevant content relevant to the specific information output on the external device and based on the estimated emotional state of the user.

8. The mobile terminal of claim 1, wherein the controller is further configured to:
display a slidable emotional state icon to indicate the emotional state of the user, and
classify and display content items in accordance with a sliding of the slidable emotional state icon.

9. The mobile terminal of 1, wherein the specific information includes at least one multimedia data, and
wherein the data corresponds to the at least one multimedia data and the generated tag information corresponds to an emoticon representing the estimated emotional state of the user.

10. The mobile terminal of claim of one of any claims 1 to 9, wherein the specific information includes video data, and
wherein the controller is further configured to capture at least one image included in the video data when the estimated emotional state of the user matches a predetermined emotional state.

11. The mobile terminal of claim 1, wherein the specific information corresponds to one of music being played or voice information in a call mode.

12. A method of controlling a mobile terminal, the method comprising:
receiving, via a controller of the mobile terminal, body condition information about a physical condition of a user while specific information is being received by a receiving device or output by an output unit (150);
analyzing, via the controller, the body condition information and estimating an emotional state of the user based on the body condition information;
generating, via the controller, tag information indicating the estimated emotional state of the user;
storing, via a memory associated with the mobile terminal, the generated tag information with data corresponding the specific information; and
outputting, via the output unit (150), the generated tag information and the data corresponding to the specific information.

13. The method of claim 12, further comprising:
measuring, via a measurement device (900) installed in a terminal body (100) configured to be attached to a part of the user, said measurement device (900) installed in the terminal body and having at least one surface configured to come into contact with the user's skin; and
transmitting, via a transmitting device, the heartbeat information to the receiving unit.

14. The method of claim of one of any claims 12 to 13, wherein the terminal body (100) is separate from the mobile terminal or is integral with the mobile terminal.

15. The method of claim 1, wherein the output unit (150) includes a display unit (151) configured to display the specific information, and
wherein the received body condition information indicates the physical condition of the user is viewing the specific information.
